# EUROPEAN PATENT APPLICATION

(11) **EP 2 960 102 A1**
(43) Date of publication of application: **30.12.2015**
(21) Application number: 13875804.0
(22) Date of filing: 22.02.2013
(51) Int. Cl.: B60L 15/20, B60K 6/442, B60K 6/445, B60L 11/14, B60W 10/08, B60W 20/00

(54) **VEHICLE DRIVE DEVICE**

(71) Applicant: Toyota Jidosha Kabushiki Kaisha, Toyota-shi, Aichi 471-8571 (JP)
(72) Inventor: IWASE, Yuji, Toyota-shi Aichi 471-8571 (JP); SUZUKI, Yosuke, Toyota-shi Aichi 471-8571 (JP); KITABATAKE, Hirotatsu, Toyota-shi Aichi 471-8571 (JP); OSHIUMI, Yasuhiro, Toyota-shi Aichi 471-8571 (JP); KAWAI, Takashi, Toyota-shi Aichi 471-8571 (JP)
(74) Representative: Intès, Didier Gérard André
(86) International application number: PCT/JP2013/054553
(87) International publication number: WO 2014/128926

(57) **Abstract**

A first rotating machine and a second rotating machine, a first travel mode, in which one rotating machine of the first rotating machine and the second rotating machine is used as a power source, and a second travel mode, in which the first rotating machine and the second rotating machine are used as the power sources, are provided. Regarding at least one rotating machine of the first rotating machine and the second rotating machine, when transition from one of the first travel mode and the second travel mode to the other is made, a degree of change in a torque command value Tt1 for said rotating machine is higher in the case where said rotating machine newly becomes the power source in a travel mode after transition (θMG1i) than in the case where said rotating machine is used as the power source in a travel mode before transition (θMG1d).

## Description

### TECHNICAL FIELD

The invention relates to a vehicle drive device.

### BACKGROUND ART

Conventionally, a vehicle that has a travel mode in which the vehicle runs by using one rotating machine as a power source and a travel mode in which the vehicle runs by using two rotating machines as the power sources is available. In Patent Literature 1, a technique for a hybrid-type vehicle is disclosed, in which an internal combustion engine is stopped and a shortage of drive power QM of an electric motor is compensated by drive power QG of a generator motor when a vehicle speed V is lower than 30 [km/h], and in which the shortage of the drive power QM is compensated by drive power QE of the internal combustion engine when the vehicle speed V is equal to or higher than 30 [km/h].

### RELATED ART LITERATURE

### PATENT LITERATURE

Patent Literature 1: Japanese Patent Application Publication No. 8-295140 (JP 8-295140 A)

### SUMMARY OF THE INVENTION

### PROBLEM TO BE SOLVED BY THE INVENTION

Here, it is desired to be able to suppress fluctuations in output torque when transition from the one travel mode to the other travel mode is made. For example, it is desired to be able to suppress the fluctuations in output torque when transition from the travel mode in which the vehicle runs by using the one rotating machine as the power source to the travel mode in which the vehicle runs by using the two rotating machines as the power sources is made.

An object of the invention is to provide a vehicle drive device that can suppress fluctuations in output torque when transition from a travel mode in which a vehicle runs by using one rotating machine as a power source to a travel mode in which a vehicle runs by using two rotating machines as power sources is made.

### MEANS FOR SOLVING THE PROBLEM

A vehicle drive device according to the invention includes: a first rotating machine; a second rotating machine; a first travel mode in which one rotating machine of the first rotating machine and the second rotating machine is used as a power source; a second travel mode in which the first rotating machine and the second rotating machine are used as the power sources, in which, regarding at least one rotating machine of the first rotating machine and the second rotating machine, a degree of change in a torque command value for said rotating machine during transition from one of the first travel mode and the second travel mode to the other is higher in the case where said rotating machine newly becomes the power source in a travel mode after the transition than in the case where said rotating machine is used as the power source in a travel mode before the transition.

In the above vehicle drive device, in the case where the transition from the first travel mode to the second travel mode is made, it is preferred that the degree of change in the torque command value for the rotating machine that newly becomes the power source in the second travel mode is higher than the degree of change in the torque command value for the rotating machine that is used as the power source in the first travel mode.

The above vehicle drive device further includes an engine, a planetary gear mechanism, and a restriction device for restricting rotation of the engine, the first rotating machine is preferably connected to a sun gear of the planetary gear mechanism, the engine is preferably connected to a carrier of the planetary gear mechanism, the second rotating machine and a drive wheel are preferably connected to a ring gear of the planetary gear mechanism, and the rotation of the engine is preferably restricted by the restricting device, so as to execute the second travel mode.

In the above vehicle drive device, in the case where a vehicle runs by using the second rotating machine as the power source in the first travel mode and the transition from the first travel mode to the second travel mode is made, it is preferred that the degree of change in the torque command value for the first rotating machine is higher than the degree of change in the torque command value for the second rotating machine.

In the above vehicle drive device, in the case where a vehicle runs by using the first rotating machine as the power source in the first travel mode and the transition from the first travel mode to the second travel mode is made, it is preferred that the degree of change in the torque command value for the second rotating machine is higher than the degree of change in the torque command value for the first rotating machine.

The above vehicle drive device further includes an engine, a planetary gear mechanism, a first clutch, a second clutch, and a brake, the first rotating machine is preferably connected to the engine via the first clutch, the second rotating machine is preferably connected to a sun gear of the planetary gear mechanism, a drive wheel is preferably connected to a carrier of the planetary gear mechanism, the first rotating machine is preferably connected to a ring gear of the planetary gear mechanism via the second clutch, and the brake preferably restricts rotation of the ring gear when being engaged. In the first travel mode, the vehicle preferably runs by using the second rotating machine as the power source while the brake is engaged and the second clutch is disengaged. In the second travel mode, the vehicle preferably runs while the brake is disengaged and the second clutch is engaged.

The above vehicle drive device further includes an engine and a clutch for connecting/disconnecting the engine and a drive wheel, the first rotating machine is preferably connected to a power transmission path at a position closer to the engine than the clutch, and the second rotating machine is preferably connected to the power transmission path at a position closer to the drive wheel than the clutch. In the first travel mode, the vehicle preferably runs while the clutch is disengaged and the second rotating machine is used as the power source. In the second travel mode, the vehicle preferably runs while the clutch is engaged.

### EFFECT OF THE INVENTION

The vehicle drive device according to the invention exerts such an effect that fluctuations in output torque during transition from a travel mode, in which a vehicle runs by using one rotating machine as a power source, to a travel mode, in which the vehicle runs by using two rotating machines as the power sources can be suppressed.

### BRIEF DESCRIPTION OF THE DRAWINGS

[FIG. 1] FIG. 1 is a schematic configuration diagram of a vehicle according to a first embodiment.
[FIG. 2] FIG. 2 is a view that shows an operational engagement table of the vehicle according to the first embodiment.
[FIG. 3] FIG. 3 is a collinear diagram according to an MG1 single drive mode.
[FIG. 4] FIG. 4 is a collinear diagram according to an MG2 single drive mode.
[FIG. 5] FIG. 5 is a collinear diagram according to a transition time to a second travel mode.
[FIG. 6] FIG. 6 is a collinear diagram according to the second travel mode.
[FIG. 7] FIG. 7 is a time chart according to torque control in the case where requested torque of the first embodiment is constant.
[FIG. 8] FIG. 8 is another time chart according to the torque control in the case where the requested torque of the first embodiment is constant.
[FIG. 9] FIG. 9 is a time chart according to torque control in the case where the requested torque of the first embodiment is increased.
[FIG. 10] FIG. 10 is a time chart according to torque control in the case where the requested torque of the first embodiment is decreased.
[FIG. 11] FIG. 11 is a schematic configuration diagram of a vehicle according to a first modified example of the first embodiment.
[FIG. 12] FIG. 12 is a schematic configuration diagram of a vehicle according to a second modified example of the first embodiment.
[FIG. 13] FIG. 13 is a schematic configuration diagram of a vehicle according to a second embodiment.
[FIG. 14] FIG. 14 is a view that shows an operational engagement table of the vehicle according to the second embodiment.
[FIG. 15] FIG. 15 is a collinear diagram according to a first travel mode of the second embodiment.
[FIG. 16] FIG. 16 is a collinear diagram according to a second travel mode of the second embodiment.
[FIG. 17] FIG. 17 is a time chart according to torque control in the case where requested torque of the second embodiment is constant.
[FIG. 18] FIG. 18 is a time chart according to torque control in the case where the requested torque of the second embodiment is increased.
[FIG. 19] FIG. 19 is a time chart according to torque control in the case where the requested torque of the second embodiment is decreased.
[FIG. 20] FIG. 20 is a schematic configuration diagram of a vehicle according to a third embodiment.
[FIG. 21] FIG. 21 is a view that shows an operational engagement table of the vehicle according to the third embodiment.
[FIG. 22] FIG. 22 is a collinear diagram according to a first travel mode of the third embodiment.
[FIG. 23] FIG. 23 is a collinear diagram according to a second travel mode of the third embodiment.
[FIG. 24] FIG. 24 is a time chart according to torque control in the case where requested torque of the third embodiment is constant.
[FIG. 25] FIG. 25 is a time chart according to torque control in the case where the requested torque of the third embodiment is increased.
[FIG. 26] FIG. 26 is a time chart according to torque control in the case where the requested torque of the third embodiment is decreased.

### MODES FOR CARRYING OUT THE INVENTION

A detailed description will hereinafter be made on a vehicle drive device according to embodiments of the invention with reference to the drawings. It should be noted that this invention is not limited to these embodiments. In addition, as components in the following embodiments, those that can easily be assumed by persons skilled in the art or the substantially same components are included.

### [First Embodiment]

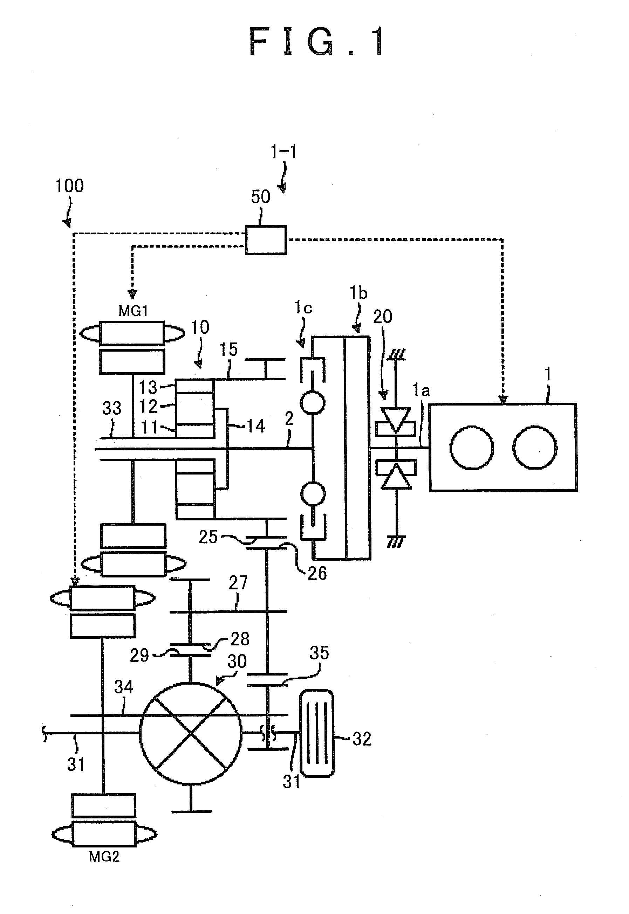

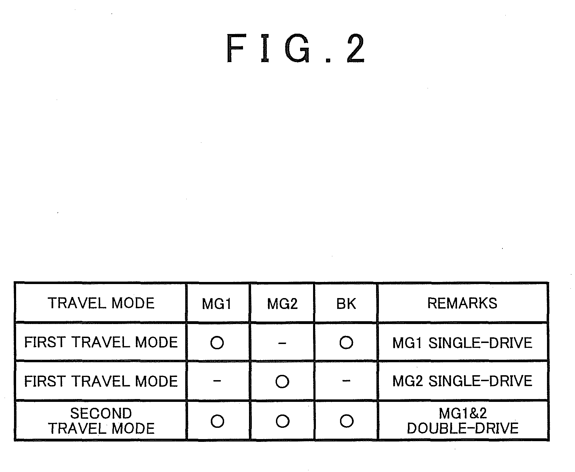

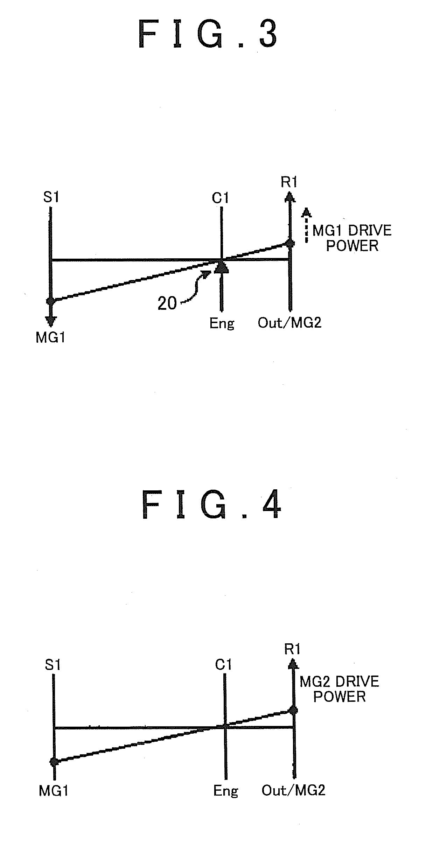

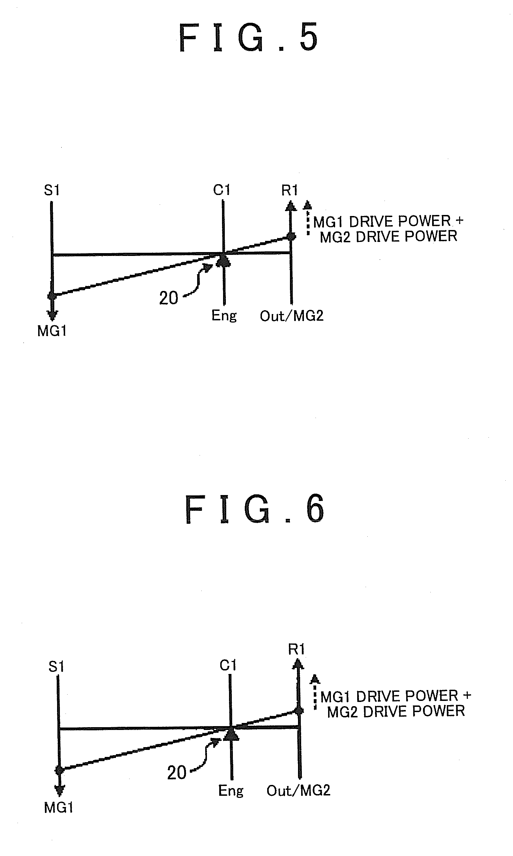

A description will be made on a first embodiment with reference to FIG. 1 to FIG. 10. This embodiment relates to a vehicle drive device. FIG. 1 is a schematic configuration diagram of a vehicle according to the first embodiment, FIG. 2 is a view that shows an operational engagement table of the vehicle according to the first embodiment, FIG. 3 is a collinear diagram according to an MG1 single drive mode, FIG. 4 is a collinear diagram according to an MG2 single drive mode, FIG. 5 is a collinear diagram according to a transition time to a second travel mode, and FIG. 6 is a collinear diagram according to the second travel mode.

As shown in FIG. 1, a vehicle 100 is a hybrid (HV) vehicle that has an engine 1, a first rotating machine MG1, and a second rotating machine MG2 as power sources. The vehicle 100 may be a plug-in hybrid (PHV) vehicle that can be charged by an external electric power supply. The vehicle 100 is configured by including a planetary gear mechanism 10, a one-way clutch 20, and a drive wheel 32 in addition to the above power sources.

In addition, a vehicle drive device 1-1 according to this embodiment is configured by including the engine 1, the first rotating machine MG1, the second rotating machine MG2, the planetary gear mechanism 10, and the one-way clutch 20. The vehicle drive device 1-1 may be configured by further including an ECU 50. The vehicle drive device 1-1 can be applied to an FF (front-engine front-wheel-drive) vehicle, an RR (rear-engine rear-wheel-drive) vehicle, and the like. For example, the vehicle drive device 1-1 is installed in the vehicle 100 such that an axial direction thereof aligns with a vehicle width direction.

The engine 1 as an engine converts combustion energy of fuel into rotational motion of a rotational shaft 1a to output. A flywheel 1b is coupled to the rotational shaft 1a. The flywheel 1b is connected to an input shaft 2 via a damper 1c. The damper 1c transmits power between the flywheel 1b and the input shaft 2 via an elastic body such as a spring. The input shaft 2 is coaxially arranged with the rotational shaft 1 a of the engine 1 and is also arranged on an extension of the rotational shaft 1 a. The input shaft 2 is connected to a carrier 14 of the planetary gear mechanism 10.

The planetary gear mechanism 10 is a single pinion type and has a sun gear 11, a pinion gear 12, a ring gear 13, and the carrier 14. The ring gear 13 is coaxially arranged with the sun gear 11 and is also arranged on a radially outer side of the sun gear 11. The pinion gear 12 is arranged between the sun gear 11 and the ring gear 13 and meshes with each of the sun gear 11 and the ring gear 13. The pinion gear 12 is supported by the carrier 14 in a freely rotatable manner. The carrier 14 is coupled to the input shaft 2 and integrally rotates with the input shaft 2. Thus, together with the input shaft 2, the pinion gear 12 can turn (revolve) around a center axis of the input shaft 2 and also can turn (rotate) around a center axis of the pinion gear 12 by being supported by the carrier 14.

A rotational shaft 33 of the first rotating machine MG1 is connected to the sun gear 11. A rotor of the first rotating machine MG1 is connected to the sun gear 11 via the rotational shaft 33 and integrally rotates with the sun gear 11. A counter drive gear 25 is connected to the ring gear 13. The counter drive gear 25 is an output gear that integrally rotates with the ring gear 13. The counter drive gear 25 is provided on an outer peripheral surface of a cylindrical member 15 in a cylindrical shape, and the ring gear 13 is provided on an inner peripheral surface thereof.

The counter drive gear 25 meshes with a counter driven gear 26. The counter driven gear 26 is connected to a drive pinion gear 28 via a counter shaft 27. The counter driven gear 26 and the drive pinion gear 28 rotate integrally. In addition, a reduction gear 35 meshes with the counter driven gear 26. The reduction gear 35 is connected to a rotational shaft 34 of the second rotating machine MG2. In other words, rotation of the second rotating machine MG2 is transmitted to the counter driven gear 26 via the reduction gear 35. The reduction gear 35 has a smaller diameter than the counter driven gear 26, reduces a speed of the rotation of the second rotating machine MG2, and transmits it to the counter driven gear 26.

The drive pinion gear 28 meshes with a differential ring gear 29 of a differential 30. The differential 30 is connected to the drive wheels 32 via right and left drive shafts 31. The ring gear 13 is connected to the drive wheel 32 via the counter drive gear 25, the counter driven gear 26, the drive pinion gear 28, the differential 30, and the drive shaft 31. In addition, the second rotating machine MG2 is connected to a power transmission path between the ring gear 13 and the drive wheel 32 and can transmit power to each of the ring gear 13 and the drive wheel 32.

Each of the first rotating machine MG1 and the second rotating machine MG2 has a function as a motor (an electric motor) and a function as a generator. The first rotating machine MG1 and the second rotating machine MG2 are connected to a battery via an inverter. The first rotating machine MG1 and the second rotating machine MG2 can convert electric power that is supplied from the battery into mechanical power to output, and can also convert the mechanical power into the electric power by being driven by the input power. The electric power generated by the rotating machines MG1, MG2 can be stored in the battery. As the first rotating machine MG1 and the second rotating machine MG2, for example, an AC synchronous motor generator can be used.

In the vehicle 100 of this embodiment, the one-way clutch 20, the flywheel 1b, the damper 1c, the counter drive gear 25, the planetary gear mechanism 10, and the first rotating machine MG1 are coaxially arranged with the engine 1 in this order from the nearest side to the engine 1. In addition, the vehicle drive device 1-1 of this embodiment is a double-axis type in which the input shaft 2 and the rotational shaft 34 of the second rotating machine MG2 are arranged on different axes.

The one-way clutch 20 is provided on the rotational shaft 1a of the engine 1. The one-way clutch 20 is a restriction device that restricts rotation of the engine 1. The one-way clutch 20 permits rotation of the rotational shaft 1a in a positive direction during an operation of the engine 1 in the case where a rotational direction of the rotational shaft 1a is set as the positive direction, and restricts the rotation thereof in a negative direction.

The ECU 50 has a function as a controller for controlling the vehicle 100. The ECU 50 is an electronic control unit that has a computer, and controls the engine 1, the first rotating machine MG1, and the second rotating machine MG2. In addition, the ECU 50 receives signals indicative of various types of information, such as information on the engine 1, information on the first rotating machine MG1, information on the second rotating machine MG2, information on a vehicle speed, information on the battery, and information on operation input to operation equipment such as an accelerator pedal operation amount.

On the basis of requested torque for the vehicle 100 (hereinafter, may simply be referred to as "requested torque"), the ECU 50 determines command values of torque output by the engine 1 (hereinafter, may simply be referred to as "engine torque"), torque output by the first rotating machine MG1 (hereinafter, may simply be referred to as "MG1 torque"), and torque output by the second rotating machine MG2 (hereinafter, may simply be referred to as "MG2 torque"). The ECU 50 outputs the command value of the engine torque, the command value of the MG1 torque, and the command value of the MG2 torque. The engine 1 is, for example, controlled by an engine ECU so as to realize the command value of the engine torque. The first rotating machine MG1 and the second rotating machine MG2 are, for example, controlled by an MG_ECU so as to realize the command value of the MG1 torque and the command value of the MG2 torque, respectively.

The vehicle 100 can selectively implement a hybrid (HV) travel or an EV travel. The HV travel is a travel mode in which the vehicle 100 runs by using the engine 1 as the power source. In addition to the engine 1, the second rotating machine MG2 may further be used as the power source in the HV travel. In the HV travel, the first rotating machine MG1 outputs reaction torque and functions as a reaction receiver with respect to the engine torque. Accordingly, the engine torque is output from the ring gear 13 and is transmitted to the drive wheel 32.

The EV travel is a travel mode in which at least one of the first rotating machine MG1 and the second rotating machine MG2 is used as the power source. In the EV travel, the vehicle can run while the engine 1 is stopped. As the EV travel modes, the vehicle drive device 1-1 according to this embodiment has: a first travel mode (a single-drive EV mode) in which the vehicle 100 runs by using one rotating machine of the first rotating machine MG1 and the second rotating machine MG2 as the independent power source; and a second travel mode (a double-drive EV mode) in which the vehicle 100 runs by using the first rotating machine MG1 and the second rotating machine MG2 as the power sources. It should be noted that, in this specification, the EV travel mode in which the first rotating machine MG1 is used as the independent power source is also described as "MG1 single-drive EV mode" and the EV travel mode in which the second rotating machine MG2 is used as the independent power source is also described as "MG2 single-drive EV mode".

In FIG. 2, a symbol ○ in an "MG1" column indicates that the first rotating machine MG1 is used as the power source and a symbol ○ in an "MG2" column indicates that the second rotating machine MG2 is used as the power source. In addition, a symbol o in a "BK" column indicates that the one-way clutch 20 is in an engaged state. As shown in FIG. 2, in the MG1 single-drive EV mode, the vehicle runs while the first rotating machine MG1 is used as the power source and the one-way clutch 20 is in the engaged state. In collinear diagrams of FIG. 3 onward according to the first embodiment, an S1-axis indicates a rotational speed of the sun gear 11, a C1-axis indicates a rotational speed of the carrier 14, and an R1-axis indicates a rotational speed of the ring gear 13. As shown in FIG. 3, in the MG1 single-drive EV mode, the first rotating machine MG1 outputs negative torque to make negative rotation during a forward travel. Accordingly, the one-way clutch 20 is engaged, and rotation of the carrier 14 is restricted.

The carrier 14 functions as the reaction receiver with respect to the torque of the first rotating machine MG1 and causes the ring gear 13 to output positive torque. It should be noted that the positive torque is torque in a positive rotational direction. A rotational direction of the ring gear 13 during the forward travel of the vehicle 100 is the positive rotational direction. The MG1 torque that is transmitted from the ring gear 13 to the drive wheel 32 generates drive power for driving the vehicle 100 in a forward travel direction.

As shown in FIG. 2, the second rotating machine MG2 is used as the power source in the MG2 single-drive EV mode. The one-way clutch 20 may be in either the engaged state or a disengaged state. As shown in FIG. 4, in the MG2 single-drive EV mode, the rotational speed of the carrier 14 and the speed of the engine 1 are 0, and the first rotating machine MG1 rotates idle.

When transition from the first travel mode to the second travel mode is made, the vehicle drive device 1-1 can make transition from the first travel mode to the second travel mode through a transition mode. The transition mode is a mode in which each of the MG1 torque and the MG2 torque is changed to become torque to be shared in the second travel mode. The ECU 50 calculates the torque to be shared by each of the first rotating machine MG1 and the second rotating machine MG2 in the second travel mode by using a predetermined calculation method. In the transition mode, the ECU 50 changes each of the MG1 torque and the MG2 torque to become the torque to be shared in the second travel mode.

FIG. 5 shows a collinear diagram according to the transition mode when transition from the MG2 single-drive EV mode to the second travel mode is made. In the transition mode, the ECU 50 changes the torque of the first rotating machine MG1, which is the rotating machine to newly become the power source in the second travel mode, to become the torque to be shared in the second travel mode. In addition, in the transition mode, the ECU 50 changes the torque of the second rotating machine MG2, which has been the power source in the MG2 single-drive EV mode, to become the torque to be shared in the second travel mode. The ECU 50 calculates the MG1 torque to be shared by the first rotating machine MG1 and the MG2 torque to be shared by the second rotating machine MG2 in the second travel mode in accordance with various conditions such as a magnitude of the requested torque and the vehicle speed, for example. In the transition mode, the ECU 50 determines the command value of the MG1 torque in the transition mode so as to change the MG1 torque to become the torque to be shared by the first rotating machine MG1 in the second travel mode. In addition, in the transition mode, the ECU 50 determines the command value of the MG2 torque in the transition mode so as to change the MG2 torque to become the torque to be shared by the second rotating machine MG2 in the second travel mode.

As shown in FIG. 5, the negative torque is output from the first rotating machine MG1 in the transition mode, and thus the one-way clutch 20 is engaged and causes the ring gear 13 to output the MG1 torque. Accordingly, the vehicle 100 starts the travel by using the drive power by the torque of the first rotating machine MG1 and the drive power by the torque of the second rotating machine MG2. In other words, the vehicle drive device 1-1 restricts the rotation of the engine 1 (and the carrier 14) by the one-way clutch 20 and executes the second travel mode.

The transition to the second travel mode is completed when each of the MG1 torque and the MG2 torque is changed to become the torque to be shared in the second travel mode. In the second travel mode shown in FIG. 6, the MG1 torque and the MG2 torque have respectively become the torque to be shared by the first rotating machine MG1 and the torque to be shared by the second rotating machine MG2 in the second travel mode, and output torque that is requested to the vehicle 100 (the requested torque) is thereby realized.

Here, it is desired to be able to suppress fluctuations in torque during the transition from the first travel mode to the second travel mode. Even when the output of the torque is commanded to the rotating machine that newly becomes the power source in the second travel mode (for example, the first rotating machine MG1 in a case where the transition from the MG2 single-drive EV mode to the second travel mode is made), a delay occurs in actual transmission of the MG1 torque to the drive wheel 32. This problem is produced by inertia torque, for example. For example, the first rotating machine MG1 is connected to the flywheel 1b via the damper 1c. In the case where the first rotating machine MG1 starts outputting the MG1 torque as the new power source, a delay occurs by the inertia torque of the flywheel 1b or the first rotating machine MG1 itself in a period from a time at which the MG1 torque starts being output to a time at which the MG1 torque actually starts being output to the drive wheel 32. Accordingly, the fluctuations in torque occur, in which the output torque of the vehicle 100 is changed to a shortage side with respect to the requested torque, and unintended shock by a driver is possibly produced. In addition, the delay possibly occurs by rattling of the one-way clutch 20 or twisting of the damper 1c in the period from the time at which the first rotating machine MG1 starts outputting the MG1 torque to the time at which the MG1 torque actually starts being output to the drive wheel 32.

In the vehicle drive device 1-1 according to this embodiment, regarding at least one rotating machine of the first rotating machine MG1 and the second rotating machine MG2, a degree of change in the torque command value for said rotating machine when the transition from one of the first travel mode and the second travel mode to the other is made is higher in the case where said rotating machine newly becomes the power source in a travel mode after the transition than in the case where said rotating machine is used as the power source in a travel mode before the transition. Accordingly, a delay in the torque of the rotating machine that newly becomes the power source is suppressed, and the fluctuations in output torque are suppressed.

In addition, in the vehicle drive device 1-1 according to this embodiment, in the case where the transition from the first travel mode to the second travel mode is made, the degree of change in the torque command value for the rotating machine that newly becomes the power source in the second travel mode is higher than the degree of change in the torque command value for the rotating machine that is used as the power source in the first travel mode. Accordingly, the fluctuations in output torque during the transition from the first travel mode to the second travel mode are suppressed.

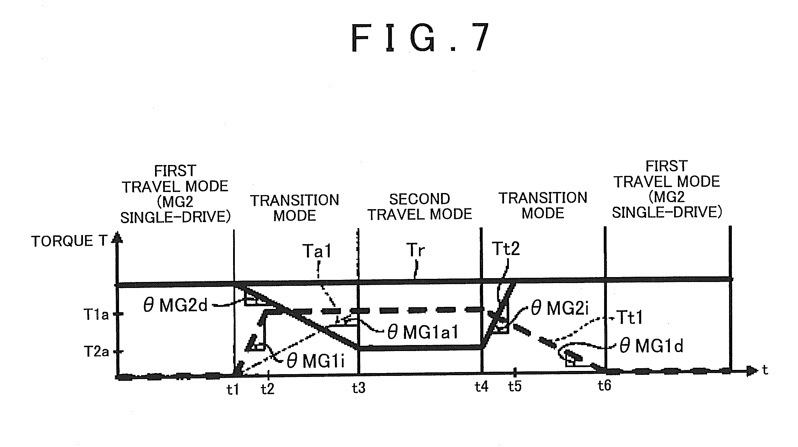

FIG. 7 is a time chart according to torque control in the case where the requested torque of the first embodiment is constant. In FIG. 7, a vertical axis indicates torque. It should be noted that each torque in FIG. 7 is a value that is converted to the torque on the same shaft and is a value that is converted to the torque on the drive shaft 31 in this embodiment. Requested torque Tr is the requested torque for the vehicle 100 and is a command value of torque that is output to the drive shaft 31. An MG1 torque command value Tt1 is output to the first rotating machine MG1 and is the command value of the MG1 torque. An MG2 torque command value Tt2 is output to the second rotating machine MG2 and is the command value of the MG2 torque.

FIG. 7 shows the MG1 torque command value Tt1 and the MG2 torque command value Tt2 when the requested torque Tr is constant. A determination on the transition from the MG2 single-drive EV mode to the second travel mode is made, and then the transition to the second travel mode is started at time t1. In the transition mode, the ECU 50 changes the MG1 torque command value Tt1 to become torque T1a to be shared by the first rotating machine MG1 in the second travel mode. Meanwhile, in the transition mode, the ECU 50 changes the MG2 torque command value Tt2 to become torque T2a to be shared by the second rotating machine MG2 in the second travel mode. In the transition mode from the MG2 single-drive EV mode to the second travel mode, a degree of change θMG1i in the MG1 torque command value Tt1 is higher than a degree of change θMG2d in the MG2 torque command value Tt2. Here, the degree of change θ is a degree of change in each of the torque command values Tt1, Tt2, and indicates a magnitude of inclination of the transition in each of the torque command values Tt1, Tt2 (an absolute value) in this embodiment.

The inclination of the MG1 torque command value Tt1 for the first rotating machine MG1, which newly becomes the power source, in the transition mode is positive, and thus the MG1 torque command value Tt1 is increased. Meanwhile, the inclination of the MG2 torque command value Tt2 for the second rotating machine MG2 in the transition mode is negative, and thus the MG2 torque command value Tt2 is decreased. In the transition mode in which the transition from the MG2 single-drive EV mode to the second travel mode is made, the degree of change θMG1i in the MG1 torque command value Tt1 is higher than the degree of change θMG2d in the MG2 torque command value Tt2. Since the degree of change in the MG1 torque command value Tt1 is set higher than the degree of change in the MG2 torque command value Tt2, the delay in the MG1 torque is suppressed, and the fluctuations in output torque of the vehicle 100 are suppressed. At time t2 which is prior to time t3 at which the MG2 torque command value Tt2 becomes the torque T2a to be shared in the second travel mode, the MG1 torque command value Tt1 is changed to become the torque T1a to be shared.

It should be noted that specified MG1 torque Ta1 shown in FIG. 7 indicates the transition in the MG1 torque command value Tt1 in the case where the MG1 torque command value Tt1 and the MG2 torque command value Tt2 respectively become the torque to be shared in the second travel mode T1a, T2a at the same timing. The specified MG1 torque Ta1 is, for example, calculated such that a sum of the specified MG1 torque Ta1 and the MG2 torque command value Tt2 becomes the requested torque Tr. A degree of change θMG1a1 in the specified MG1 torque Ta1 is equal to the degree of change θMG2d in the MG2 torque command value Tt2 in the same transition mode. In addition, the degree of change θMG1i in the MG1 torque command value Tt1 is higher than the degree of change θMG1a1 in the specified MG1 torque Ta1 in the same transition mode.

The degree of change θMG1i in the MG1 torque command value Tt1 in the transition mode may be defined such that the MG1 torque that is actually output to the drive shaft 31 is monotonically increased or linearly increased from the time t1 to the time t3, for example. As one example, the degree of change θMG1i in the MG1 torque command value Tt1 is defined such that the MG1 torque that is actually output to the drive shaft 31 conforms with the specified MG1 torque Ta1. In other words, the degree of change θMG1i in the MG1 torque command value Tt1 may be defined such that the actual output torque of the vehicle 100 conforms with the requested torque Tr.

Since the degree of change θMG1i in the MG1 torque command value Tt1 is higher than the degree of change θMG2d in the MG2 torque command value Tt2 in the transition mode from the first travel mode to the second travel mode, a delay in the drive power by the MG1 torque is suppressed. Accordingly, the fluctuations in output torque during the transition from the first travel mode to the second travel mode are suppressed. When the MG1 torque command value Tt1 becomes the torque T1a to be shared in the second travel mode, and the MG2 torque command value Tt2 becomes the torque T2a to be shared in the second travel mode, the transition to the second travel mode is completed. In FIG. 7, the transition to the second travel mode is completed at the time t3.

In addition, in this embodiment, the degrees of change in the torque command values Tt1, Tt2 during the transition differ between a case where the rotating machines MG1, MG2 are used as the power source in the mode before the transition and a case where the rotating machines MG1, MG2 newly becomes the power sources in the mode after the transition. The degree of change θ in the torque command value for the rotating machine that newly becomes the power source is increased such that the delay in torque can be suppressed. In this embodiment, the degrees of change in the torque command values Tt1, Tt2 in the transition mode in the case where the rotating machines MG1, MG2 newly become the power sources in the travel mode after the transition are higher than the degrees of change in the torque command values Tt1, Tt2 in the transition mode in the case where the rotating machines MG1, MG2 are used as the power sources in the travel mode before the transition.

As shown in FIG. 7, regarding the first rotating machine MG1, the degree of change in the MG1 torque command value Tt1 in the transition mode is higher in the case where the transition from the MG2 single-drive EV mode to the second travel mode is made, that is, the degree of change θMG1i in the case where the first rotating machine MG1 newly becomes the power source in the travel mode after the transition than in the case where the transition from the second travel mode to the MG2 single-drive EV mode is made, that is, the degree of change θMG1d in the case where the first rotating machine MG1 is used as the power source in the travel mode before the transition. Accordingly, the delay in response of the drive power by the MG1 torque in the case where the first rotating machine MG1 newly becomes the power source is suppressed. The degree of change in the torque command value in the transition mode for the rotating machine that newly becomes the power source in the travel mode after the transition may be a fixed value or variable in accordance with a condition. For example, the degree of change in the torque command value when the vehicle speed is high may be set higher than the degree of change in the torque command value when the vehicle speed is low. Accordingly, the degree of change in the torque command value can be changed in accordance with the inertia torque that is changed by the rotational speed.

It should be noted that, in the case where the transition from the second travel mode to the first travel mode (the MG2 single-drive EV mode) is made, the degrees θ of change in the torque command values Tt1, Tt2 of the two rotating machines MG1, MG2 may differ from each other. For example, in the transition between the modes shown in FIG. 7, a degree of change θMG2i in the torque command value Tt2 in the transition mode of the second rotating machine MG2 that becomes the independent power source after the transition may be set higher than a degree of change θMG1d in the torque command value Tt1 in the transition mode of the first rotating machine MG1 that is no longer used as the power source after the transition. In addition, the degree of change θMG2i in the torque command value Tt2 for the second rotating machine MG2, the torque command value of which is increased in the transition mode, may be set higher than the degree of change θMG1d in the torque command value Tt1 for the first rotating machine MG1, the torque command value of which is decreased in the transition mode.

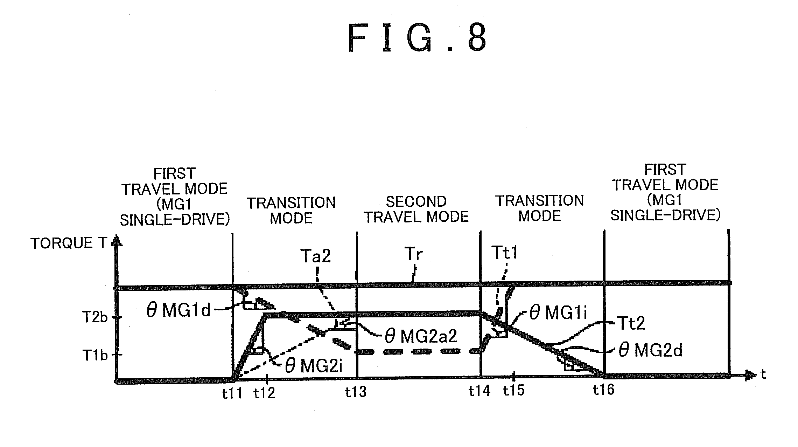

FIG. 8 is another time chart according to the torque control in the case where the requested torque of the first embodiment is constant. FIG. 8 shows the time chart when the transition from the MG1 single-drive EV mode to the second travel mode and then to the MG1 single-drive EV mode is made in the case where the requested torque Tr is constant. A determination on the transition from the MG1 single-drive EV mode to the second travel mode is made, and then the transition to the second travel mode is started at time t11. In the transition mode, the ECU 50 changes the MG1 torque command value Tt1 to become the torque T1b to be shared by the first rotating machine MG1 in the second travel mode. Meanwhile, in the transition mode, the ECU 50 changes the MG2 torque command value Tt2 to become the torque T2b to be shared by the second rotating machine MG2 in the second travel mode.

In the transition mode from the MG1 single-drive EV mode to the second travel mode, the degree of change θMG2i in the MG2 torque command value Tt2 is higher than the degree of change θMG1d in the MG1 torque command value Tt1. Accordingly, the delay in torque of the second rotating machine MG2 that newly becomes the power source in the second travel mode is suppressed, and thus the fluctuations in output torque are suppressed. The MG2 torque command value Tt2 is increased to become the torque T2b to be shared at time t12. The MG1 torque command value Tt1 becomes the torque T1b to be shared at time t13 after the time t12.

A specified MG2 torque Ta2 shown in FIG. 8 indicates the transition in the MG2 torque command value Tt2 in the case where the MG2 torque command value Tt2 is changed such that the MG2 torque command value Tt2 becomes the torque T2b to be shared in the second travel mode at the time t13 at which the MG1 torque command value Tt1 becomes the torque T1b to be shared in the second travel mode. A degree of change θMG2a2 in the specified MG2 torque Ta2 is equal to the degree of change θMG1d in the MG1 torque command value Tt1. The degree of change θMG2i in the MG2 torque command value Tt2 in the transition mode may be defined such that the MG2 torque actually output to the drive shaft 31 is monotonically increased or linearly increased from the time t11 to the time t13, for example. As one example, the degree of change θMG2i in the MG2 torque command value Tt2 is defined such that the MG2 torque actually output to the drive shaft 31 conforms with the specified MG2 torque Ta2. In other words, the degree of change θMG2i in the MG2 torque command value Tt2 may be defined such that the actual output torque of the vehicle 100 conforms with the requested torque Tr.

In addition, as shown in FIG. 8, in the second rotating machine MG2, the degree of change in the MG2 torque command value Tt2 in the transition mode is higher in the case where it newly becomes the power source in the travel mode after the transition (θMG2i) than in the case where it is used as the power source in the travel mode before the transition (θMG2d). It should be noted that, in the case where the transition from the second travel mode to the first travel mode (the MG1 single-drive EV mode) is made, the inclination θMG1i of the torque command value Tt1 in the transition mode of the first rotating machine MG1 may be set larger than the inclination θMG2d of the torque command value Tt2 in the transition mode of the second rotating machine MG2.

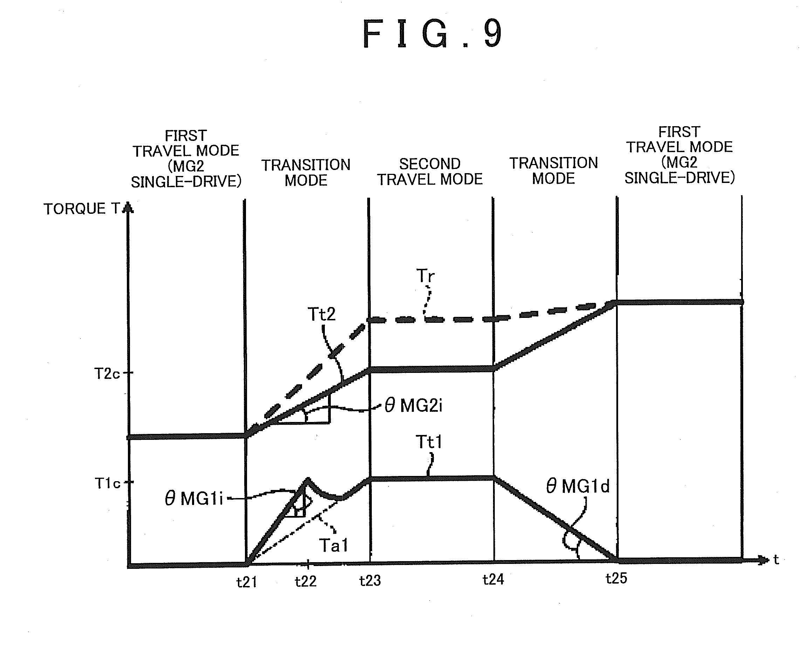

FIG. 9 is a time chart according to torque control in the case where the requested torque of the first embodiment is increased. FIG. 9 shows the time chart in the case where the transition from the MG2 single-drive EV mode to the second travel mode is made and the transition to the MG2 single-drive EV mode is made again when the requested torque Tr is increased. The determination on the transition from the MG2 single-drive EV mode to the second travel mode is made, and then the transition to the second travel mode is started at time t21. As shown in FIG. 9, the degree of change θMG1i in the torque command value (the MG1 torque command value Tt1) for the first rotating machine MG1 that newly becomes the power source in the transition mode, in which the transition from the MG2 single-drive EV mode to the second travel mode is made, is higher than the degree of change θMG2i in the torque command value (the MG2 torque command value Tt2) for the second rotating machine MG2 that is used as the power source in the first travel mode.

In FIG. 9, the specified MG1 torque Ta1 indicates the transition in the MG1 torque command value Tt1 in the case where the MG1 torque command value Tt1 is changed to become torque to be shared T1c in the second travel mode at the same timing as timing at which the MG2 torque command value Tt2 becomes torque to be shared T2c in the second travel mode. The ECU 50 causes the MG1 torque command value Tt1 to converge to the specified MG1 torque Ta1 when the MG1 torque command value Tt1 is increased to become the torque to be shared T1c at time t22. In other words, the ECU 50 reduces a difference between the MG1 torque command value Tt1 and the specified MG1 torque Ta1 at the time t22 onward. As a method for reducing the difference at this time, the difference may significantly be reduced at an initial stage, and a reduction amount may gradually be reduced thereafter.

The transition in the MG1 torque command value Tt1 from the time t22 to time t23 is indicated by a curve that is curved to be projected toward a horizontal axis side (downward). The MG1 torque command value Tt1 between the time t21 and the time t23 becomes a local maximum value T1c at the time t22. The MG1 torque command value Tt1 in the transition mode, in which the transition from the MG2 single-drive EV mode to the second travel mode is made, may be defined such that the MG1 torque that is actually output to the drive shaft 31 is monotonically increased or linearly increased from the time t21 to the time t23. As one example, the MG1 torque command value Tt1 in transition mode may be defined such that the MG1 torque that is actually output to the drive shaft 31 is changed along with the specified MG1 torque Ta1.

When the MG2 torque command value Tt2 becomes the torque to be shared T2c in the second travel mode at the time t23, the transition to the second travel mode is completed. The degree of change θMG1d in the MG1 torque command value Tt1 during the transition from the second travel mode to the MG2 single-drive EV mode is lower than the degree of change θMG1i in the MG1 torque command value Tt1 during the transition from the MG2 single-drive EV mode to the second travel mode.

It should be noted that, in the case where the transition between the MG1 single-drive EV mode and the second travel mode is made when the requested torque is increased, the same torque control as that described above can be executed. In this case, the torque control in which the MG1 torque command value Tt1 is replaced with the MG2 torque command value Tt2 in FIG. 9 can be adopted.

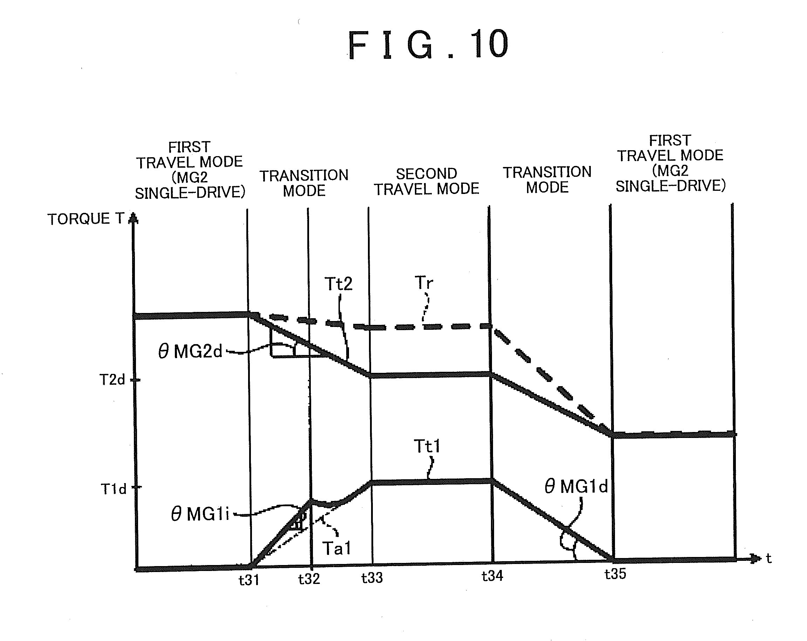

FIG. 10 is a time chart according to torque control in the case where the requested torque of the first embodiment is decreased. FIG. 10 shows the time chart in the case where the transition from the MG2 single-drive EV mode to the second travel mode is made and the transition to the MG2 single-drive EV mode is made again when the requested torque Tr is decreased. The determination on the transition from the MG2 single-drive EV mode to the second travel mode is made, and then the transition to the second travel mode is started at time t31. As shown in FIG. 10, the degree of change θMG1i in the torque command value (the MG1 torque command value Tt1) for the first rotating machine MG1 that newly becomes the power source in the transition mode, in which the transition from the MG2 single-drive EV mode to the second travel mode is made, is higher than the degree of change θMG2d in the torque command value (the MG2 torque command value Tt2) for the second rotating machine MG2 that is used as the power source in the first travel mode.

In FIG. 10, the specified MG1 torque Ta1 indicates the transition in the MG1 torque command value Tt1 in the case where the MG1 torque command value Tt1 is changed to become torque to be shared T1d in the second travel mode at the same timing as timing at which the MG2 torque command value Tt2 becomes torque to be shared T2d in the second travel mode. Until time t32, the ECU 50 increases the MG1 torque command value Tt1 by the degree of change θMG1i that is higher than the degree of change in the specified MG1 torque Ta1, and thereafter causes the MG1 torque command value Tt1 to converge to the specified MG1 torque Ta1. A method for reducing the difference between the MG1 torque command value Tt1 and the specified MG1 torque Ta1 at this time can be the same as the method that has been described with reference to FIG. 9.

The transition in the MG1 torque command value Tt1 from the time t32 to time t33 is indicated by a curve that is curved to be projected toward the horizontal axis side. The MG1 torque command value Tt1 between the time t31 and the time t33 is increased from the time t31 to the time t32, starts being decreased at the time t32, is then increased again, and becomes the maximum value T1d at the time t33. The MG1 torque command value Tt1 in the transition mode from the MG2 single-drive EV mode to the second travel mode may be defined such that the MG1 torque that is actually output to the drive shaft 31 is monotonically increased or linearly increased from the time t31 to the time t33, for example. As one example, the MG1 torque command value Tt1 in the transition mode may be defined such that the MG1 torque that is actually output to the drive shaft 31 is changed along with the specified MG1 torque Ta1.

When the MG2 torque command value Tt2 becomes the torque to be shared T2d in the second travel mode at the time t33, the transition to the second travel mode is completed. The degree of change θMG1d in the MG1 torque command value Tt1 during the transition from the second travel mode to the MG2 single-drive EV mode is lower than the degree of change θMG1i in the MG1 torque command value Tt1 during the transition from the MG2 single-drive EV mode to the second travel mode.

It should be noted that, in the case where the transition between the MG1 single-drive EV mode and the second travel mode is made when the requested torque Tr is decreased, the same torque control as that described above can be executed. In this case, the torque control in which the MG1 torque command value Tt1 is replaced with the MG2 torque command value Tt2 in FIG. 10 can be adopted.

The vehicle 100, in which the vehicle drive device 1-1 is installed, is not limited to the one that is exemplified. For example, the vehicle 100 may be a vehicle other than the hybrid vehicle. The vehicle drive device 1-1 according to this embodiment can be applied to various types of vehicles, in each of which the first rotating machine MG1 and the second rotating machine MG2 are installed.

It should be noted that an upper limit of the torque command value at a time that the torque command value of the rotating machine that newly becomes the power source in the transition mode is changed by the high degree of change θ is not limited to the one that is exemplified. For example, in the torque control shown in FIG. 7, the MG1 torque command value Tt1 is increased by the same degree of change θMG1i until it becomes the torque T1a to be shared in the second travel mode, but upper limit torque at this time may be torque that is higher than the torque T1a to be shared in the second travel mode or may be torque that is lower than the torque T1a to be shared in the second travel mode. In addition, the degree of change θMG1i in the MG1 torque command value Tt1 may be changed until the MG1 torque command value Tt1 is increased to become the upper limit torque. For example, the degree of change θMG1i in the MG1 torque command value Tt1 in a specified period from the beginning of the transition may be set the highest, and the degree of change θMG1i in the MG1 torque command value Tt1 may be shifted to be gentle after a lapse of the specified period.

[First Modified Example of First Embodiment]

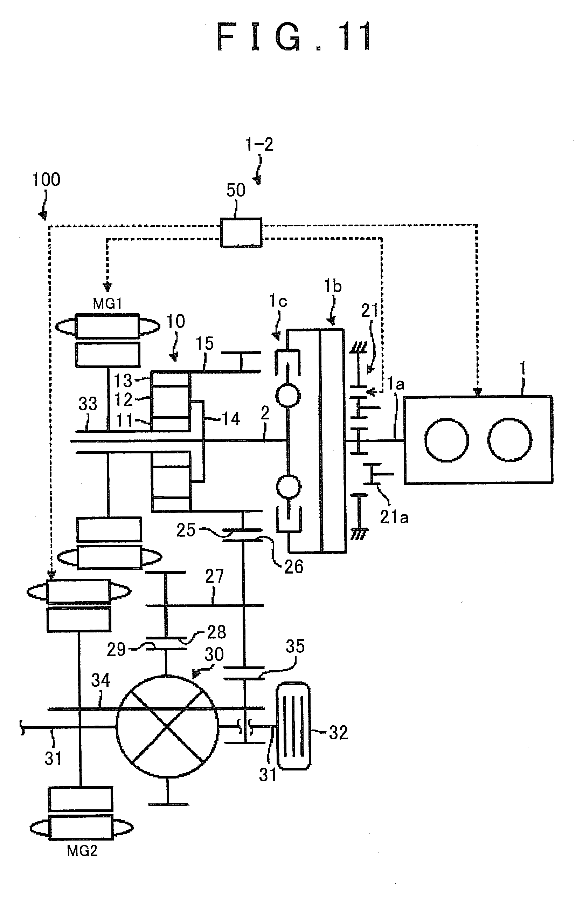

A description will be made on a first modified example of the first embodiment. Instead of the one-way clutch 20 of the above first embodiment, a dog brake 21 may be used as the restriction device. FIG. 11 is a schematic configuration diagram of a vehicle according to the first modified example of the first embodiment. A vehicle drive device 1-2 of the vehicle 100 according to the first modified example includes the dog brake 21 instead of the one-way clutch 20.

The dog brake 21 is a brake device of a meshing type. The dog brake 21 can be switched between an engaged state for restricting the rotation of the rotational shaft 1a of the engine 1 and a disengaged state for permitting the rotation of the rotational shaft 1a by moving a sleeve 21 a in the axial direction. The dog brake 21 in the engaged state couples the rotational shaft 1a to a vehicle body side and restricts the rotation of the rotational shaft 1a. The dog brake 21 in the disengaged state cancels coupling of the rotational shaft 1a to the vehicle body side and permits the rotation of the rotational shaft 1a.

The dog brake 21 is controlled by the ECU 50. In the MG1 single-drive EV mode and the second travel mode, the ECU 50 brings the dog brake 21 into the engaged state. When the dog brake 21 is engaged, the rotation of the carrier 14, which is coupled to the rotational shaft 1a, is restricted. Accordingly, the carrier 14 functions as the reaction receiver with respect to the MG1 torque and can cause the ring gear 13 to output the MG1 torque. In addition, in the MG2 single-drive EV mode, the ECU 50 brings the dog brake 21 into the disengaged state.

The torque control during the transition from the first travel mode to the second travel mode can be the same as that described in the above first embodiment. For example, when the transition from the MG2 single-drive EV mode to the second travel mode is made, the ECU 50 brings the dog brake 21 into the engaged state and commands the first rotating machine MG1 to output the MG1 torque. In the transition mode, the ECU 50 sets the degree of change θMG1i in the MG1 torque command value Tt1 to be higher than the degrees of change θMG2d, θMG2i in the MG2 torque command value Tt2.

### [Second Modified Example of First Embodiment]

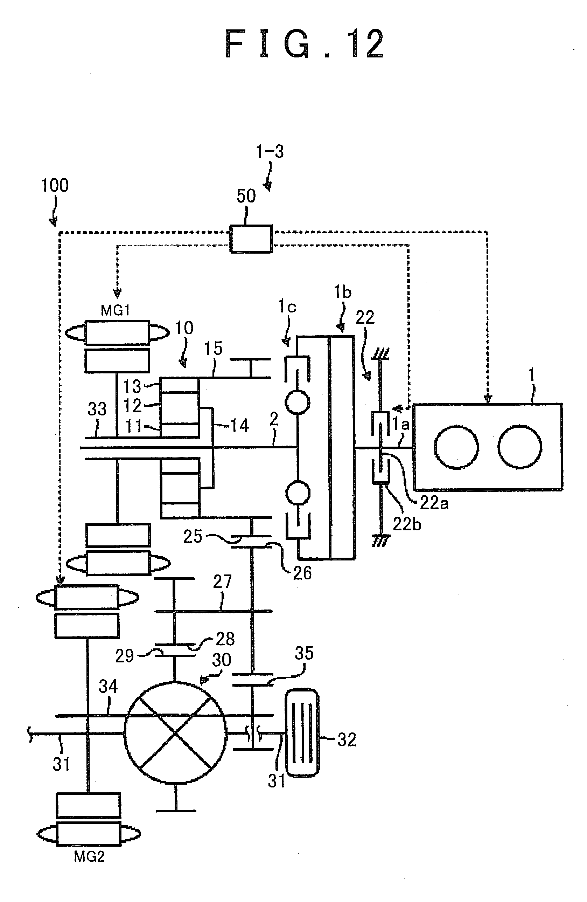

A description will be made on a second modified example of the first embodiment. Instead of the one-way clutch 20 of the above first embodiment, a friction brake 22 may be used as the restriction device. FIG. 12 is a schematic configuration diagram of a vehicle according to the second modified example of the first embodiment. A vehicle drive device 1-3 of the vehicle 100 according to the second modified example includes the friction brake 22 instead of the one-way clutch 20.

The friction brake 22 is a brake device of a friction engagement type. The friction brake 22 has: a friction engagement member 22a that is coupled to the rotational shaft 1a of the engine 1; and a friction engagement member 22b that is coupled to the vehicle body side. The friction brake 22 restricts the rotation of the rotational shaft 1 a in the engaged state and permits the rotation of the rotational shaft 1a in the disengaged state.

The friction brake 22 is controlled by the ECU 50. In the MG1 single-drive EV mode and the second travel mode, the ECU 50 brings the friction brake 22 into the engaged state, for example, into a completely engaged state. In the MG2 single-drive EV mode, the ECU 50 brings the friction brake 22 into the disengaged state.

The torque control during the transition from the first travel mode to the second travel mode can be the same as that described in the above first embodiment. For example, when the transition from the MG2 single-drive EV mode to the second travel mode is made, the ECU 50 brings the friction brake 22 into the engaged state and commands the first rotating machine MG1 to output the MG1 torque. In the transition mode, the ECU 50 sets the degree of change θMG1i in the MG1 torque command value Tt1 to be higher than the degrees of change θMG2d, θMG2i in the MG2 torque command value Tt2.

### [Second Embodiment]

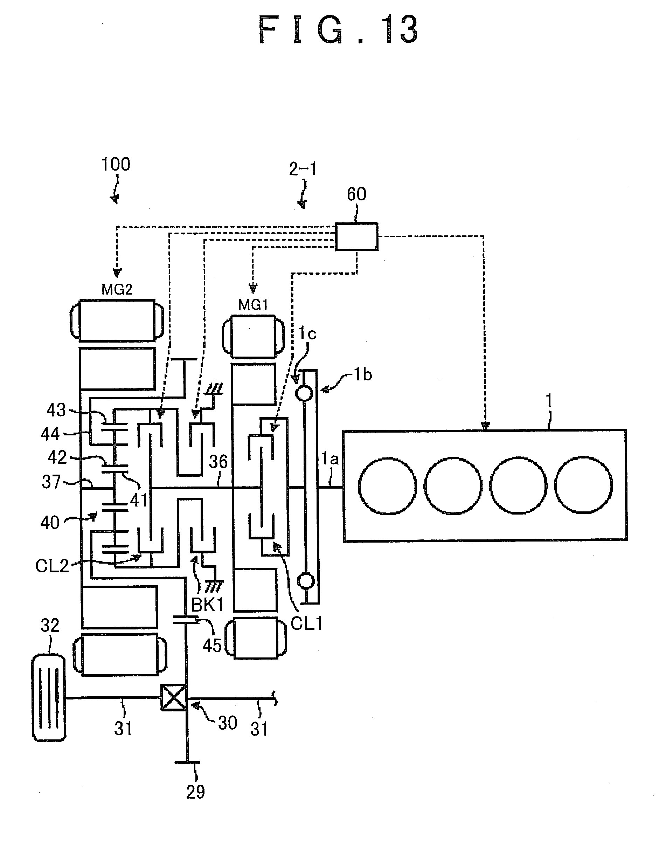

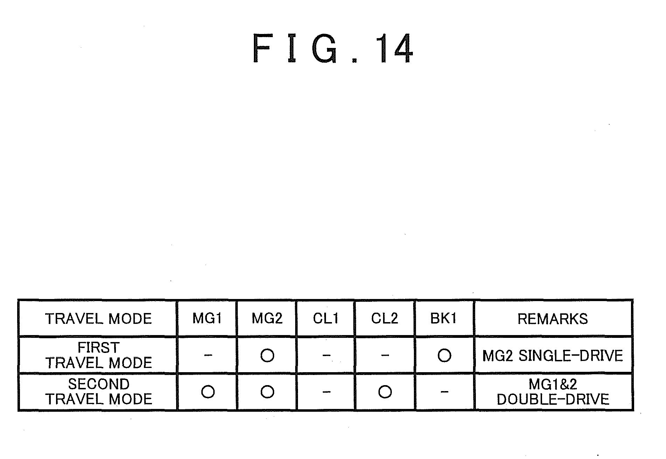

A description will be made on a second embodiment with reference to FIG. 13 to FIG. 19. For the second embodiment, components that have similar functions to those described in the above first embodiment are denoted by the same reference numerals, and the overlapping description will not be made. FIG. 13 is a schematic configuration diagram of a vehicle according to the second embodiment, and FIG. 14 is a view that shows an operational engagement table of the vehicle according to the second embodiment.

The vehicle 100 shown in FIG. 13 is the hybrid (HV) vehicle that has the engine 1, the first rotating machine MG1, and the second rotating machine MG2 as the power sources. The vehicle 100 may be the plug-in hybrid (PHV) vehicle that can be charged by the external electric power supply. The vehicle 100 is configured by including a planetary gear mechanism 40, a first clutch CL1, a second clutch CL2, and a brake BK1 in addition to the above power sources.

In addition, a vehicle drive device 2-1 according to this embodiment is configured by including the first rotating machine MG1, the second rotating machine MG2, the engine 1, the planetary gear mechanism 40, the first clutch CL1, the second clutch CL2, and the brake BK1. The vehicle drive device 2-1 may be configured by further including an ECU 60.

A rotational shaft 36 of the first rotating machine MG1 is connected to the rotational shaft 1a of the engine 1 via the first clutch CL1, the damper 1c, and the flywheel 1b. The planetary gear mechanism 40 is a single pinion type and has a sun gear 41, a pinion gear 42, a ring gear 43, and a carrier 44.

A rotational shaft 37 of the second rotating machine MG2 is connected to the sun gear 41. An output gear 45 is connected to the carrier 44. The output gear 45 meshes with the differential ring gear 29 of the differential 30. The differential 30 is connected to the drive wheels 32 via the right and left drive shafts 31. The first rotating machine MG1 is connected to the ring gear 43 via the second clutch CL2. Each of the first clutch CL1 and the second clutch CL2 can be the friction engagement type, for example.

The brake BK1 is engaged to restrict rotation of the ring gear 43. The brake BK1 of this embodiment is, for example, a brake device of the friction engagement type. The brake BK1 in an engaged state connects the ring gear 43 to the vehicle body side and restricts the rotation of the ring gear 43.

The ECU 60 controls the engine 1, the first rotating machine MG1, the second rotating machine MG2, the first clutch CL1, the second clutch CL2, and the brake BK1. The vehicle drive device 2-1 has an HV travel mode and an EV travel mode.

In the HV travel mode, the first clutch CL1 and the second clutch CL2 are engaged, and the brake BK1 is disengaged. Accordingly, the engine 1, the first rotating machine MG1, and the ring gear 43 are coupled.

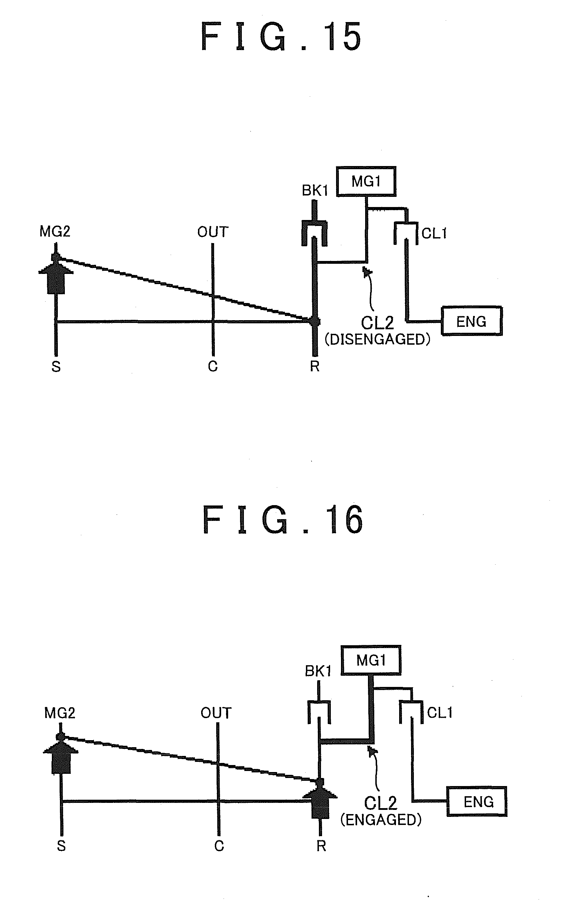

The EV travel mode includes the first travel mode and the second travel mode. The first travel mode is the travel mode in which the vehicle runs by using the second rotating machine MG2 as the power source. As shown in FIG. 14, in the first travel mode, the first clutch CL1 and the second clutch CL2 are disengaged, and the brake BK1 is engaged. FIG. 15 is a collinear diagram according to the first travel mode of the second embodiment. In the collinear diagram, an S-axis indicates a rotational speed of the sun gear 41, a C-axis indicates a rotational speed of the carrier 44, and an R-axis indicates a rotational speed of the ring gear 43. When the first clutch CL1 and the second clutch CL2 are disengaged, the engine 1 and the first rotating machine MG1 are uncoupled from the ring gear 43. Then, the rotation of the ring gear 43 is restricted by the engagement of the brake BK1. Accordingly, the ring gear 43 functions as the reaction receiver with respect to the MG2 torque and can cause the carrier 44 to output the MG2 torque.

As shown in FIG. 14, in the second travel mode, the second clutch CL2 is engaged, and the first clutch CL1 and the brake BK1 are disengaged. FIG. 16 is a collinear diagram according to the second travel mode of the second embodiment. When the first clutch CL1 is disengaged, the engine 1 is uncoupled from the first rotating machine MG1. In addition, when the second clutch CL2 is engaged, the first rotating machine MG1 is connected to the ring gear 43. Furthermore, when the brake BK1 is disengaged, the rotation of the ring gear 43 is permitted. Accordingly, the torque of the first rotating machine MG1 and the torque of the second rotating machine MG2 are output from the carrier 44.

Upon the transition to the second travel mode, the ECU 60 determines the torque to be shared by the first rotating machine MG1 and the torque to be shared by the second rotating machine MG2 in the second travel mode. The torque to be shared is determined on the basis of a gear ratio of the planetary gear mechanism 40. The torque to be shared by the first rotating machine MG1 and the torque to be shared by the second rotating machine MG2 are determined such that torque corresponding to the requested torque for the vehicle 100 is output from the carrier 44.

Here, when the transition from the first travel mode to the second travel mode is made, a delay in transmission of the MG1 torque to the drive wheel 32 possibly occurs with respect to a command to initiate the output of the MG1 torque. For example, the delay caused by the inertia torque of the first rotating machine MG1 occurs in a period from a time at which the first rotating machine MG1 starts outputting the torque to a time at which the MG1 torque starts being transmitted to the drive wheel 32 via the planetary gear mechanism 40.

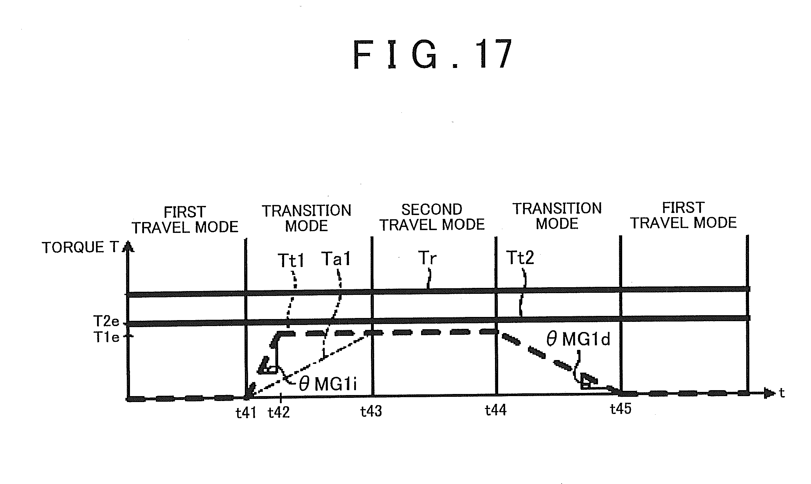

FIG. 17 is a time chart according to torque control in the case where the requested torque of the second embodiment is constant. A determination on the transition from the first travel mode to the second travel mode is made, and then the transition to the second travel mode is started at time t41. The ECU 60 changes the MG1 torque command value Tt1 to become torque to be shared T1e by the first rotating machine MG1 in the second travel mode. As shown in FIG. 17, the ECU 60 sets the degree of change θMG1i in the MG1 torque command value Tt1 during the transition from the first travel mode to the second travel mode to be higher than the degree of change θMG1d in the MG1 torque command value Tt1 during the transition from the second travel mode to the first travel mode. A rise of the MG1 torque command value Tt1 is rapid when the first rotating machine MG1 newly becomes the power source. Accordingly, the delay in the MG1 torque during the transition to the second travel mode is suppressed, and the fluctuations in output torque during the mode transition are suppressed.

A vehicle drive device 2-1 according to this embodiment terminates the transition mode, for example, when the MG1 torque command value Tt1 and the MG2 torque command value Tt2 respectively become the torque to be shared in the second travel mode T1e, T2e and each of an MG1 rotational speed and an MG2 rotational speed becomes a target rotational speed. The torque to be shared in the second travel mode T1e, T2e can each be determined on the basis of the requested torque Tr and a gear ratio of the planetary gear mechanism 40. The MG2 torque command value Tt2 in the case where the requested torque Tr does not change can have the same value (T2e) in the first travel mode and the second travel mode. The target values of the MG1 rotational speed and the MG2 rotational speed are, for example, defined on the basis of efficiency, output limit, and the like of each of the rotating machines MG1, MG2. In FIG. 17, the transition to the second travel mode is completed at time t43.

A determination on the transition from the second travel mode to the first travel mode is made, and then the transition to the first travel mode is started at time t44. The ECU 60 terminates the transition mode, for example, when the MG1 torque command value Tt1 and the MG2 torque command value Tt2 respectively become torque to be shared 0, T2e in the first travel mode and each of the MG1 rotational speed and the MG2 rotational speed becomes the target rotational speed. In FIG. 17, the transition to the first travel mode is completed at time t45.

In FIG. 17, the specified MG1 torque Ta1 indicates the transition in the MG1 torque command value Tt1 in the case where the MG1 torque command value Tt1 is changed so as to become the torque to be shared T1e in the second travel mode at the time t43. The degree of change in the specified MG1 torque Ta1 is equal to the degree of change θMG1d in the MG1 torque command value Tt1 during the transition from the second travel mode to the first travel mode. For example, the MG1 torque command value Tt1 from the time t41 to the time t43 may be defined such that the MG1 torque that is actually output to the drive shaft 31 is monotonically increased or linearly increased. As one example, the MG1 torque command value Tt1 during the transition from the first travel mode to the second travel mode may be defined such that the MG1 torque that is actually output to the drive shaft 31 is changed along with the specified MG1 torque Ta1.

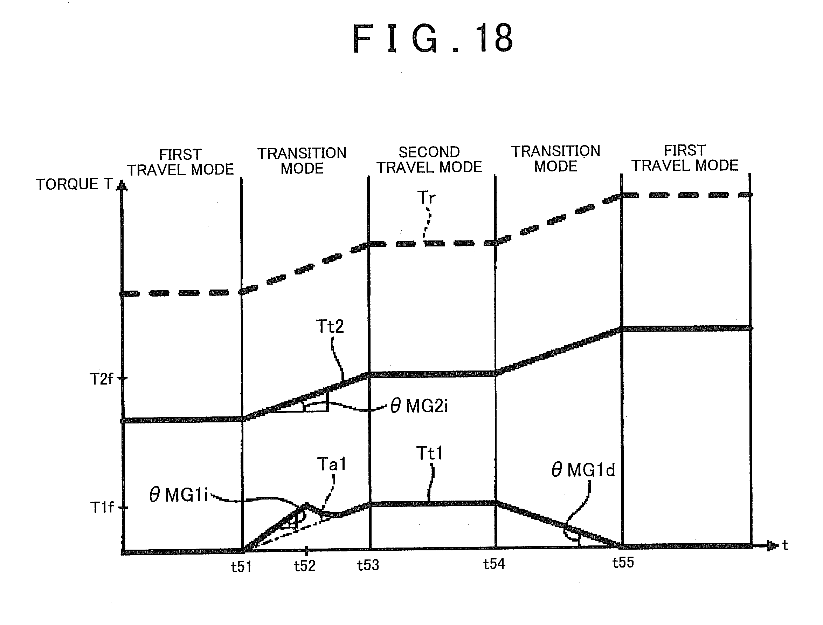

FIG. 18 is a time chart according to torque control in the case where the requested torque of the second embodiment is increased. A determination on the transition from the first travel mode to the second travel mode is made, and then the transition to the second travel mode is started at time t51. When the transition to the second travel mode is started, the ECU 60 changes the MG1 torque command value Tt1 to become torque T1f to be shared by the first rotating machine MG1 in the second travel mode. In addition, the ECU 60 changes the MG2 torque command value Tt2 to become torque T2f to be shared by the second rotating machine MG2 in the second travel mode. In FIG. 18, the transition to the second travel mode is completed at time t53.

Thereafter, the determination on the transition from the second travel mode to the first travel mode is made, and then the transition to the first travel mode is started at time t54. The ECU 60 changes the MG1 torque command value Tt1 to become the torque (0) to be shared by the first rotating machine MG1 in the first travel mode. The transition to the first travel mode is completed at time t55. The ECU 60 sets the degree of change θMG1i in the MG1 torque command value Tt1 during the transition from the first travel mode to the second travel mode to be higher than the degree of change θMG1d in the MG1 torque command value Tt1 during the transition from the second travel mode to the first travel mode. In addition, in the transition mode in which the transition from the first travel mode to the second travel mode is made, the ECU 60 sets the degree of change θMG1i in the MG1 torque command value Tt1 to be higher than the degree of change θMG2i in the MG2 torque command value Tt2.

In the transition mode from the first travel mode to the second travel mode, the MG1 torque command value Tt1 is increased to become the torque T1f to be shared at time t52 that is earlier than the time t53 at which the MG2 torque command value Tt2 reaches the torque T2f to be shared in the second travel mode. Thereafter, the ECU 60 converges the MG1 torque command value Tt1 to the specified MG1 torque Ta1. As a way for converging at this time, the MG1 torque command value Tt1 may be changed significantly toward the specified MG1 torque Ta1 at the initial stage, and the MG1 torque command value Tt1 may gradually approach the specified MG1 torque Ta1 thereafter. It should be noted that the specified MG1 torque Ta1 is the transition in the MG1 torque command value Tt1 in the case where the MG1 torque command value Tt1 and the MG2 torque command value Tt2 respectively become the torque T1f, T2f to be shared in the second travel mode at the same time.

For example, the MG1 torque command value Tt1 in the transition mode, in which the transition from the first travel mode to the second travel mode is made, may be defined such that the torque that is actually output to the drive shaft 31 is monotonically increased or linearly increased from the time t51 to the time t53. As one example, the MG1 torque command value Tt1 in the transition mode may be defined so as to be changed along with the specified MG1 torque Ta1.

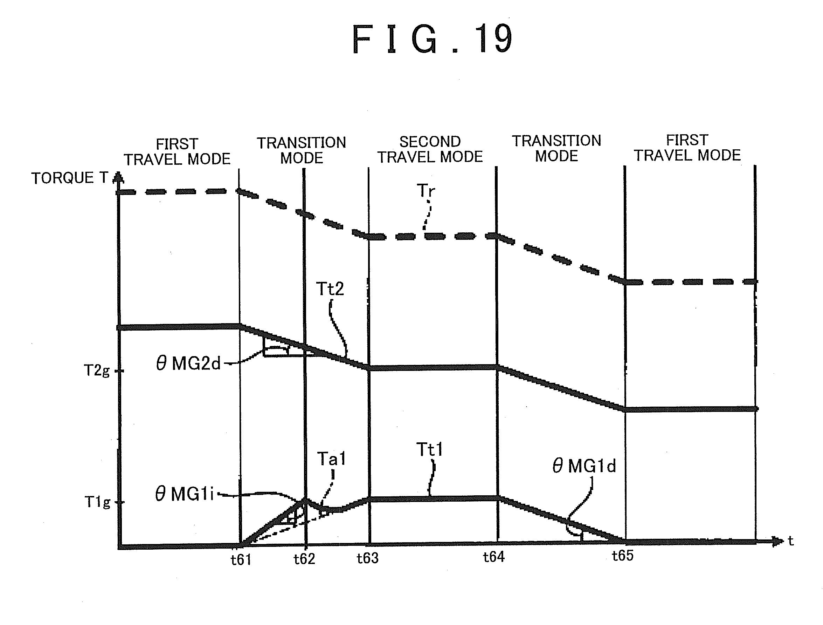

FIG. 19 is a time chart according to torque control in the case where the requested torque of the second embodiment is decreased. The determination on the transition from the first travel mode to the second travel mode is made, and then the transition to the second travel mode is started at time t61. When the transition to the second travel mode is started, the ECU 60 changes the MG1 torque command value Tt1 to become torque T1g to be shared by the first rotating machine MG1 in the second travel mode. In addition, the ECU 60 changes the MG2 torque command value Tt2 to become torque T2g to be shared by the second rotating machine MG2 in the second travel mode. In FIG. 19, the transition to the second travel mode is completed at time t63.

Thereafter, the determination on the transition from the second travel mode to the first travel mode is made, and then the transition to the first travel mode is started at time t64. The ECU 60 changes the MG1 torque command value Tt1 to become the torque (0) to be shared by the first rotating machine MG1 in the first travel mode. The transition to the first travel mode is completed at time t65. The ECU 60 sets the degree of change θMG1i in the MG1 torque command value Tt1 during the transition from the first travel mode to the second travel mode to be higher than the degree of change θMG1d in the MG1 torque command value Tt1 during the transition from the second travel mode to the first travel mode. In addition, in the transition mode in which the transition from the first travel mode to the second travel mode is made, the ECU 60 sets the degree of change θMG1i in the MG1 torque command value Tt1 to be higher than the degree of change θMG2d in the MG2 torque command value Tt2.

In FIG. 19, the specified MG1 torque Ta1 indicates the transition in the MG1 torque command value Tt1 in the case where the MG1 torque command value Tt1 is changed to become the torque T1g to be shared in the second travel mode at the same timing as timing at which the MG2 torque command value Tt2 becomes the torque T2g to be shared in the second travel mode. The ECU 60 increases the MG1 torque command value Tt1 by a higher degree of change θMG1i than the degree of change in the specified MG1 torque Ta1 in a period until time t62, and thereafter causes the MG1 torque command value Tt1 to converge to the specified MG1 torque Ta1.

The transition in the MG1 torque command value Tt1 from the time t62 to the time t63 is indicated by a curve that is curved to be projected toward the horizontal axis side. For example, the MG1 torque command value Tt1 from the time t61 to the time t63 may be defined such that the MG1 torque that is actually output to the drive shaft 31 is monotonically increased or linearly increased. As one example, the MG1 torque command value Tt1 in the transition mode may be defined such that the MG1 torque that is actually output to the drive shaft 31 is changed along with the specified MG1 torque Ta1.

### [Third Embodiment]

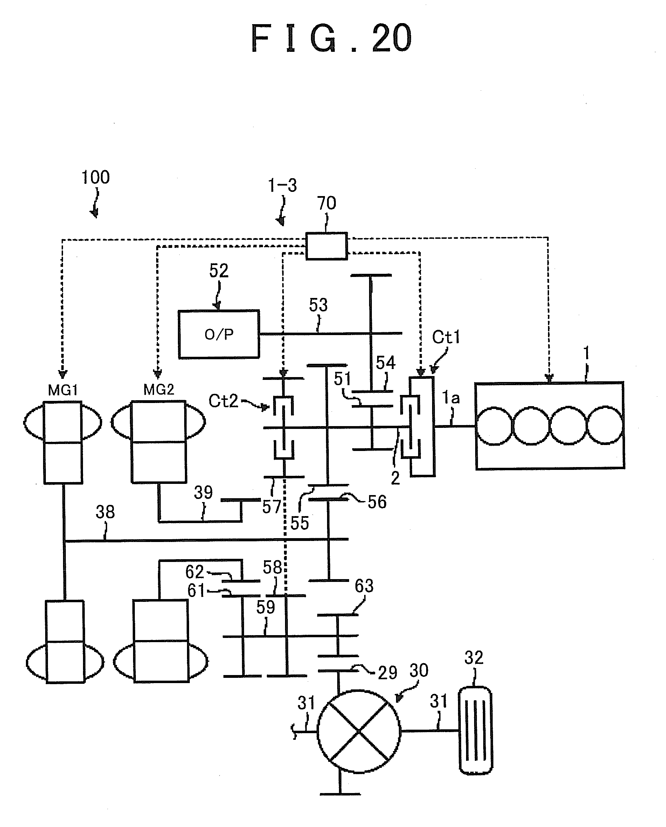

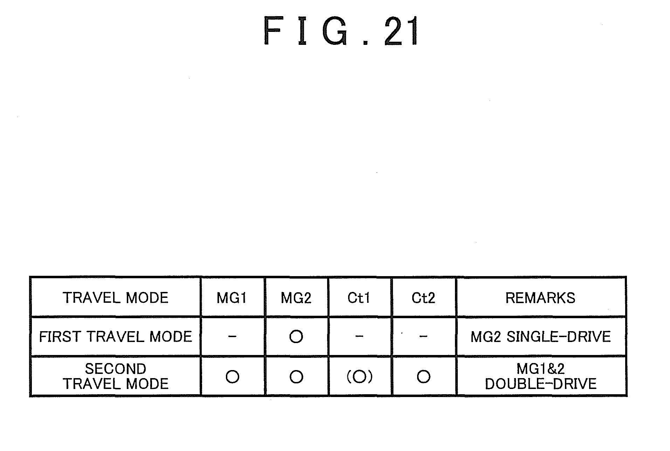

A description will be made on a third embodiment with reference to FIG. 20 to FIG. 26. For the third embodiment, components that have similar functions to those described in each of the above embodiments are denoted by the same reference numerals, and the overlapping description will not be made. FIG. 20 is a schematic configuration diagram of a vehicle according to the third embodiment, and FIG. 21 is a view that shows an operational engagement table of the vehicle according to the third embodiment.

The vehicle 100 shown in FIG. 20 is the hybrid (HV) vehicle that has the engine 1, the first rotating machine MG1, and the second rotating machine MG2 as the power sources. The vehicle 100 may be the plug-in hybrid (PHV) vehicle that can be charged by the external electric power supply. The vehicle 100 is configured by including a first clutch Ct1, a second clutch Ct2, and an oil pump 52, in addition to the above power sources.

In addition, a vehicle drive device 3-1 according to this embodiment is configured by including the first rotating machine MG1, the second rotating machine MG2, the engine 1, and the second clutch Ct2. The rotational shaft 1a of the engine 1 is connected to the input shaft 2 via the first clutch Ct1. The input shaft 2 is provided with a pump drive gear 51. The pump drive gear 51 meshes with a pump driven gear 54 that is provided on a rotational shaft 53 of the oil pump 52.

The input shaft 2 is provided with an MG1 drive gear 55. The MG1 drive gear 55 meshes with a driven gear 56 that is provided on a rotational shaft 38 of the first rotating machine MG1. A counter drive gear 57 is connected to the input shaft 2 via the second clutch Ct2. Each of the first clutch Ct1 and the second clutch Ct2 can be the clutch of the friction engagement type, for example. The counter drive gear 57 meshes with a counter driven gear 58 that is provided on a counter shaft 59. The counter shaft 59 is provided with an MG2 driven gear 61. The MG2 driven gear 61 meshes with an MG2 drive gear 62 that is provided on a rotational shaft 39 of the second rotating machine MG2.

The counter shaft 59 is provided with a drive pinion gear 63. The drive pinion gear 63 meshes with the differential ring gear 29 of the differential 30. The engine torque, the MG1 torque, and the MG2 torque are combined on the counter shaft 59 and are output from the drive opinion gear 63. In the vehicle drive device 3-1 according to this embodiment, the second clutch Ct2 is a clutch that connects/disconnects the engine 1 and the drive wheel 32 from each other. The first rotating machine MG1 is connected to the power transmission path at a position closer to the engine 1 than the second clutch Ct2, and the second rotating machine MG2 is connected to the power transmission path at a position closer to the drive wheel 32 than the second clutch Ct2. An ECU 70 controls the engine 1, the first rotating machine MG1, the second rotating machine MG2, the first clutch Ct1, and the second clutch Ct2. The vehicle drive device 3-1 has the HV travel mode and the EV travel mode.

In the HV travel mode, the first clutch Ct1 and the second clutch Ct2 are engaged. When the first clutch Ct1 and the second clutch Ct2 are engaged, the engine 1 is connected to the drive wheel 32. In addition, since the second clutch Ct2 is engaged, the first rotating machine MG1 is connected to the drive wheel 32. In the HV travel mode, the oil pump 52 is brought into a state of being connected to each of the engine 1 and the drive wheel 32 and is rotationally driven during a travel to supply oil to each part of the vehicle 100.

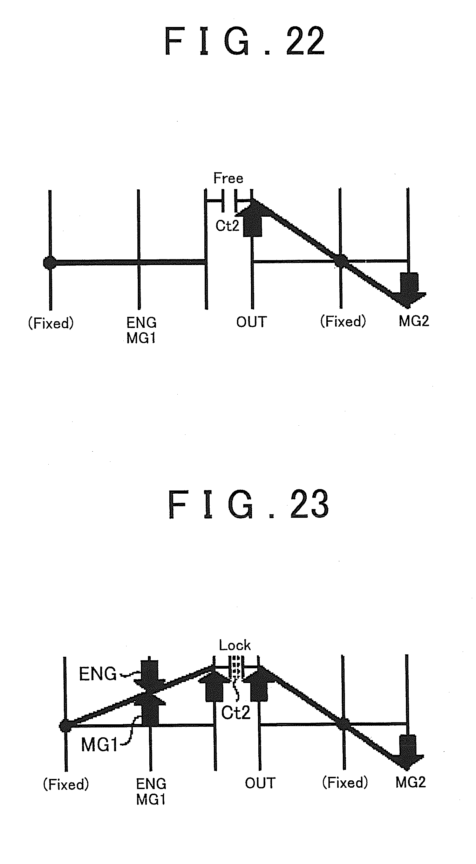

The EV travel mode includes the first travel mode and the second travel mode. The first travel mode is the mode in which the vehicle runs by using the second rotating machine MG2 as the power source. As shown in FIG. 21, the second clutch Ct2 is disengaged in the first travel mode. The first clutch Ct1 is, for example, brought into a disengaged state. FIG. 22 is a collinear diagram according to the first travel mode of the third embodiment. When the second clutch Ct2 is disengaged, the engine 1 and the rotating machine MG1 are uncoupled from the counter shaft 59 (OUT). The vehicle 100 runs by using the second rotating machine MG2 as the power source.

In the second travel mode, as shown in FIG. 21, the second clutch Ct2 is engaged. The first clutch Ct1 is, for example, brought into the engaged state. FIG. 23 is a collinear diagram according to the second travel mode of the third embodiment. When the second clutch Ct2 is engaged, the engine 1 and the first rotating machine MG1 are connected to the counter shaft 59. The vehicle 100 runs by using the first rotating machine MG1 and the second rotating machine MG2 as the power sources. It should be noted that the first clutch Ct1 may be disengaged in the second travel mode. In this way, the vehicle 100 can run without rotating the engine 1.

Here, when the transition from the first travel mode to the second travel mode is made, the delay in transmission of the MG1 torque possibly occurs with respect to a command to initiate the output of the MG1 torque. For example, the delay caused by the inertia torque of the first rotating machine MG1 occurs in a period from the time at which the first rotating machine MG1 starts outputting the torque to a time at which the MG1 torque starts being transmitted to the drive wheel 32 via the counter shaft 59. In the case where the first clutch Ct1 is engaged, the delay caused by the inertia torque of the engine 1 further occurs.

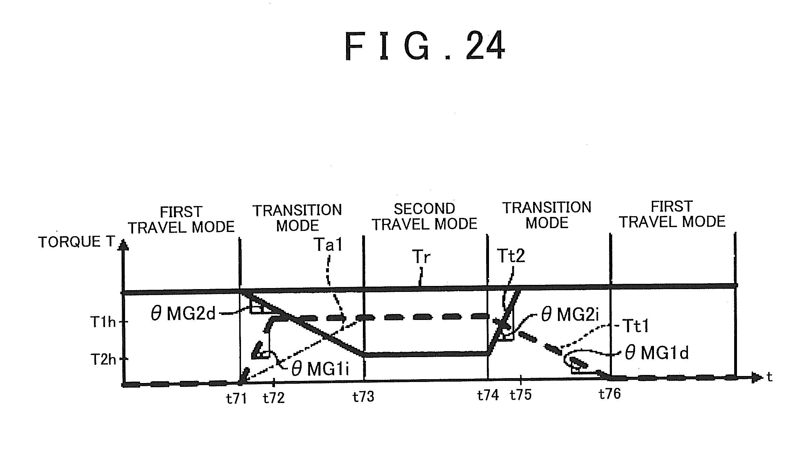

To handle this, the ECU 70 sets the degree of change in the MG1 torque command value Tt1 during the transition from the first travel mode to the second travel mode to be higher than the degree of change in the MG1 torque command value Tt1 during the transition from the second travel mode to the first travel mode. FIG. 24 is a time chart according to torque control in the case where the requested torque of the third embodiment is constant. The determination on the transition from the first travel mode to the second travel mode is made, and then the transition to the second travel mode is started at time t71. When the transition to the second travel mode is started, the ECU 70 changes the MG1 torque command value Tt1 to become torque T1h to be shared by the first rotating machine MG1 in the second travel mode. In addition, the ECU 70 changes the MG2 torque command value Tt2 to become torque T2h to be shared by the second rotating machine MG2 in the second travel mode. When the MG1 torque command value Tt1 and the MG2 torque command value Tt2 respectively become the torque T1h, T2h to be shared in the second travel mode, the transition to the second travel mode is completed. In FIG. 24, the transition to the second travel mode is completed at time t73.

Thereafter, the determination on the transition from the second travel mode to the first travel mode is made, and then the transition to the first travel mode is started at time t74. The ECU 70 changes the MG1 torque command value Tt1 to become the torque (0) to be shared by the first rotating machine MG1 in the first travel mode and changes the MG2 torque command value Tt2 to become the torque to be shared by the second rotating machine MG2 (the requested torque Tr) in the first travel mode. In FIG. 24, the transition to the first travel mode is completed at time t76.

The ECU 70 sets the degree of change θMG1i in the MG1 torque command value Tt1 during the transition from the first travel mode to the second travel mode to be higher than the degree of change θMG1d in the MG1 torque command value Tt1 during the transition from the second travel mode to the first travel mode. In addition, in the transition mode in which the transition from the first travel mode to the second travel mode is made, the ECU 70 sets the degree of change θMG1i in the MG1 torque command value Tt1 to be higher than the degree of change θMG2d in the MG2 torque command value Tt2. Accordingly, the delay in the MG1 torque is suppressed, and the fluctuations in output torque during the transition to the second travel mode are suppressed.

In FIG. 24, the specified MG1 torque Ta1 indicates the transition in the MG1 torque command value Tt1 in the case where the MG1 torque command value Tt1 and the MG2 torque command value Tt2 are changed to respectively become the torque T1h, T2h to be shared in the second travel mode at the same timing. For example, the MG1 torque command value Tt1 during the transition from the first travel mode to the second travel mode may be defined such that the MG1 torque that is actually output to the drive shaft 31 is monotonically increased or linearly increased. As one example, the MG1 torque command value Tt1 in the transition mode may be defined such that the MG1 torque that is actually output to the drive shaft 31 is changed along with the specified MG1 torque Ta1.

It should be noted that, in the second rotating machine MG2, the degree of change θMG2i in the MG2 torque command value Tt2 during the transition from the second travel mode to the first travel mode may be set higher than the degree of change θMG2d in the MG2 torque command value Tt2 during the transition from the first travel mode to the second travel mode. In addition, in the transition mode in which the transition from the second travel mode to the first travel mode is made, the degree of change θMG2i in the MG2 torque command value Tt2 may be set higher than the degree of change θMG1d in the MG1 torque command value Tt1.

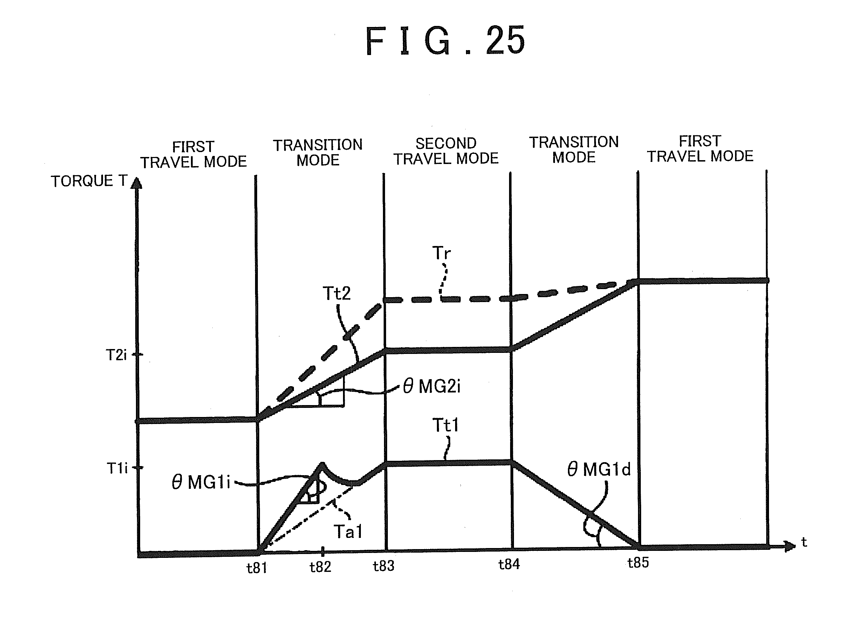

FIG. 25 is a time chart according to torque control in the case where the requested torque of the third embodiment is increased. The determination on the transition from the first travel mode to the second travel mode is made, and then the transition to the second travel mode is started at time t81. When the transition to the second travel mode is started, the ECU 70 changes the MG1 torque command value Tt1 to become torque T1i to be shared by the first rotating machine MG1 in the second travel mode. In addition, the ECU 70 changes the MG2 torque command value Tt2 to become torque T2i to be shared by the second rotating machine MG2 in the second travel mode. When the MG1 torque command value Tt1 becomes the torque T1i to be shared in the second travel mode, and the MG2 torque command value Tt2 becomes the torque T2i to be shared in the second travel mode, the transition mode is terminated. In FIG. 25, the transition to the second travel mode is completed at time t83.

Thereafter, the determination on the transition from the second travel mode to the first travel mode is made, and then the transition to the first travel mode is started at time t84. When the transition to the first travel mode is started, the ECU 70 changes the MG1 torque command value Tt1 to become the torque (0) to be shared by the first rotating machine MG1 in the first travel mode. In addition, the ECU 70 changes the MG2 torque command value Tt2 to become the torque (Tr) to be shared by the second rotating machine MG2 in the second travel mode. In FIG. 25, the transition to the first travel mode is completed at time t85.

The ECU 70 sets the degree of change θMG1i in the MG1 torque command value Tt1 during the transition from the first travel mode to the second travel mode to be higher than the degree of change θMG1d in the MG1 torque command value Tt1 during the transition from the second travel mode to the first travel mode. In addition, in the transition mode in which the transition from the first travel mode to the second travel mode is made, the ECU 70 sets the degree of change θMG1i in the MG1 torque command value Tt1 to be higher than the degree of change θMG2i in the MG2 torque command value Tt2. Since the degree of change in the MG1 torque command value Tt1 is increased, the delay in the MG1 torque is suppressed, and the fluctuations in output torque during the transition to the second travel mode are suppressed. The MG1 torque command value Tt1 is increased to become the torque T1i to be shared in the second travel mode at time t82 that is earlier than the time t83 at which the MG2 torque command value Tt2 becomes the torque T2i to be shared in the second travel mode.

The specified MG1 torque Ta1 indicates the transition in the MG1 torque command value Tt1 in the case where the MG1 torque command value Tt1 is changed such that the MG2 torque command value Tt2 and the MG1 torque command value Tt1 respectively become the torque T1i, T2i to be shared in the second travel mode at the same timing. When the MG1 torque command value Tt1 is increased to become the torque T1i to be shared in the second travel mode, the ECU 70 causes the MG1 torque command value Tt1 to converge to the specified MG1 torque Ta1. At this time, the difference between the MG1 torque command value Tt1 and the specified MG1 torque Ta1 may significantly be reduced at the initial stage, and the reduction amount may gradually be reduced thereafter.

For example, the MG1 torque command value Tt1 during the transition from the first travel mode to the second travel mode may be defined such that the MG1 torque that is actually output to the drive shaft 31 is monotonically increased or linearly increased. As one example, the MG1 torque command value Tt1 in the transition mode may be defined such that the MG1 torque that is actually output to the drive shaft 31 is changed along with the specified MG1 torque Ta1.

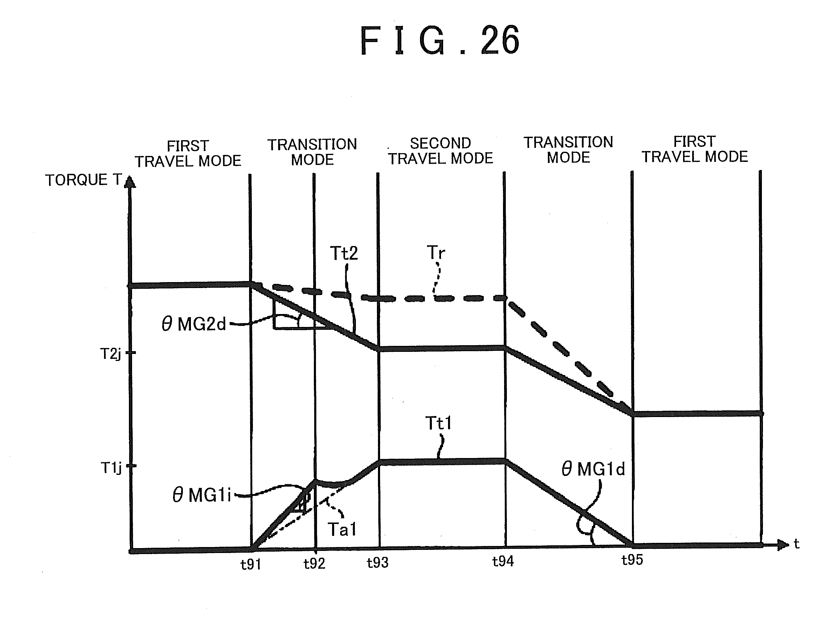

FIG. 26 is a time chart according to torque control in the case where the requested torque of the third embodiment is decreased. The determination on the transition from the first travel mode to the second travel mode is made, and then the transition to the second travel mode is started at time t91. When the transition to the second travel mode is started, the ECU 70 changes the MG1 torque command value Tt1 to become torque T1j to be shared by the first rotating machine MG1 in the second travel mode. In addition, the ECU 70 changes the MG2 torque command value Tt2 to become torque T2j to be shared by the second rotating machine MG2 in the second travel mode. When the MG1 torque command value Tt1 becomes the torque T1j to be shared in the second travel mode and the MG2 torque command value Tt2 becomes the torque T2j to be shared in the second travel mode, the transition mode is terminated. In FIG. 26, the transition to the second travel mode is completed at time t93.

Thereafter, the determination on the transition from the second travel mode to the first travel mode is made, and then the transition to the first travel mode is started at time t94. When the transition to the first travel mode is started, the ECU 70 changes the MG1 torque command value Tt1 to become the torque (0) to be shared by the first rotating machine MG1 in the first travel mode. In addition, the ECU 70 changes the MG2 torque command value Tt2 to become the torque to be shared by the second rotating machine MG2 (the requested torque Tr) in the second travel mode. In FIG. 26, the transition to the first travel mode is completed at time t95.

The ECU 70 sets the degree of change θMG1i in the MG1 torque command value Tt1 during the transition from the first travel mode to the second travel mode to be higher than the degree of change θMG1d in the MG1 torque command value Tt1 during the transition from the second travel mode to the first travel mode. In addition, in the transition mode in which the transition from the first travel mode to the second travel mode is made, the ECU 70 sets the degree of change θMG1i in the MG1 torque command value Tt1 to be higher than the degree of change θMG2d in the MG2 torque command value Tt2. Since the degree of change θMG1i in the MG1 torque command value Tt1 is increased, the delay in the MG1 torque is suppressed, and the fluctuations in output torque during the transition to the second travel mode are suppressed.

The specified MG1 torque Ta1 indicates the transition in the MG1 torque command value Tt1 in the case where the MG1 torque command value Tt1 and the MG2 torque command value Tt2 are respectively changed to become the torque T1j, T2j to be shared in the second travel mode at the same timing. The ECU 70 increases the MG1 torque command value Tt1 by the higher degree of change θMG1i than the degree of change in the specified MG1 torque Ta1 from the time t91 to time t92. The transition in the MG1 torque command value Tt1 from the time t92 to the time t93 is indicated by a curve that is curved to be projected toward the horizontal axis side. For example, the MG1 torque command value Tt1 during the transition from the first travel mode to the second travel mode may be defined such that the MG1 torque that is actually output to the drive shaft 31 is monotonically increased or linearly increased. As one example, the MG1 torque command value Tt1 in the transition mode may be defined such that the MG1 torque that is actually output to the drive shaft 31 is changed along with the specified MG1 torque Ta1.

What has been disclosed in each of the embodiments and the modified examples described above can appropriately be combined to be implemented.

### DESCRIPTION OF THE REFERENCE NUMERALS

- 1-1, 1-2, 1-3, 2-1, 3-1/: VEHICLE DRIVE DEVICE
- 1/: ENGINE
- 10/: PLANETARY GEAR MECHANISM
- 11/: SUN GEAR
- 12/: PINION GEAR
- 13/: RING GEAR
- 14/: CARRIER
- 20/: ONE-WAY CLUTCH
- 31/: DRIVE SHAFT
- 32/: DRIVE WHEEL
- 50, 60, 70/: ECU
- 100/: VEHICLE
- MG1/: FIRST ROTATING MACHINE
- MG2/: SECOND ROTATING MACHINE
- Tt1/: MG1 TORQUE COMMAND VALUE
- Tt2/: MG2 TORQUE COMMAND VALUE
- Tr/: REQUESTED TORQUE

## Claims

1. A vehicle drive device comprising:
a first rotating machine;
a second rotating machine;
a first travel mode in which one rotating machine of the first rotating machine and the second rotating machine is used as a power source; and
a second travel mode in which the first rotating machine and the second rotating machine are used as the power sources, wherein
regarding at least one rotating machine of the first rotating machine and the second rotating machine, a degree of change in a torque command value for said rotating machine during transition from one of the first travel mode and the second travel mode to the other is higher in the case where said rotating machine newly becomes the power source in a travel mode after the transition than in the case where said rotating machine is used as the power source in a travel mode before the transition.

2. The vehicle drive device according to claim 1, wherein
in the case where the transition from the first travel mode to the second travel mode is made, the degree of change in the torque command value for the rotating machine that newly becomes the power source in the second travel mode is higher than the degree of change in the torque command value for the rotating machine that is used as the power source in the first travel mode.

3. The vehicle drive device according to claim 1 or 2 further comprising
an engine, a planetary gear mechanism, and a restriction device for restricting rotation of the engine, wherein
the first rotating machine is connected to a sun gear of the planetary gear mechanism, the engine is connected to a carrier of the planetary gear mechanism, and the second rotating machine and a drive wheel are connected to a ring gear of the planetary gear mechanism, and
rotation of the engine is restricted by the restricting device, so as to execute the second travel mode.

4. The vehicle drive device according to claim 3, wherein,
in the case where a vehicle runs by using the second rotating machine as the power source in the first travel mode and the transition from the first travel mode to the second travel mode is made, the degree of change in the torque command value for the first rotating machine is higher than the degree of change in the torque command value for the second rotating machine.

5. The vehicle drive device according to claim 3, wherein,
in the case where a vehicle runs by using the first rotating machine as the power source in the first travel mode and the transition from the first travel mode to the second travel mode is made, the degree of change in the torque command value for the second rotating machine is higher than the degree of change in the torque command value for the first rotating machine.

6. The vehicle drive device according to claim 1, further comprising:
an engine, a planetary gear mechanism, a first clutch, a second clutch, and a brake, wherein
the first rotating machine is connected to the engine via the first clutch,
the second rotating machine is connected to a sun gear of the planetary gear mechanism, a drive wheel is connected to a carrier of the planetary gear mechanism, and the first rotating machine is connected to a ring gear of the planetary gear mechanism via the second clutch,
the brake restricts rotation of the ring gear when being engaged,
in the first travel mode, the vehicle runs by using the second rotating machine as the power source while the brake is engaged and the second clutch is disengaged, and
in the second travel mode, the vehicle runs while the brake is disengaged and the second clutch is engaged.

7. The vehicle drive device according to claim 1 further comprising:
an engine and a clutch for connecting/disconnecting the engine and a drive wheel, wherein
the first rotating machine is connected to a power transmission path at a position closer to the engine than the clutch,
the second rotating machine is connected to the power transmission path at a position closer to the drive wheel than the clutch,
in the first travel mode, the vehicle runs while the clutch is disengaged and the second rotating machine is used as the power source, and
in the second travel mode, the vehicle runs while the clutch is engaged.
